# EUROPEAN PATENT SPECIFICATION

(11) **EP 1 702 964 B1**
(45) Date of publication and mention of the grant of the patent: **31.03.2010**
(21) Application number: 05709281.9
(22) Date of filing: 24.01.2005
(51) Int. Cl.: C09D 183/00, B32B 27/00, B41M 5/40

(54) **HEAT RESISTANCE LUBRICITY IMPARTING COATING AGENT AND THERMAL TRANSFER RECORDING MEDIUM**
HITZEBESTÄNDIGKEIT UND SCHMIERFÄHIGKEIT VERLEIHENDES BESCHICHTUNGSMITTEL SOWIE AUFZEICHNUNGSMEDIUM FÜR DEN THERMOTRANSFERDRUCK
AGENT DE REVETEMENT CONFERANT UNE RESISTANCE THERMIQUE ET UNE LUBRIFICATION ET SUPPORT D ENREGISTREMENT DE TRANSFERT THERMIQUE

(30) Priority: 03.02.2004 JP 2004026478
(43) Date of publication of application: 20.09.2006
(73) Proprietor: Natoco Co., Ltd., Nishikamo-gun, Aichi 470-0213 (JP)
(72) Inventor: TERANISHI, Shigekazu; c/o Natoco Co., Ltd., Nagoya-shi, Aichi-ken 467-0861 (JP); YOKOYAMA, Norio; c/o Natoco Co., Ltd., Nagoya-shi, Aichi-ken 467-0861 (JP)
(74) Representative: Oser, Andreas
(86) International application number: PCT/JP2005/000837
(87) International publication number: WO 2005/075588

(56) References cited:
- EP-A- 0 978 541
- WO-A1-02/100922
- JP-A- 5 185 757
- JP-A- 2000 017 028
- JP-A- 2002 069 190
- JP-A- 2002 088 122
- JP-A- 2003 223 027
- US-A- 5 773 153
- US-A- 5 952 103

## Description

### TECHNICAL FIELD

The present invention relates to a heat-resistant lubricity imparting coating agent that can form a heat-resistant lubricous protective layer on the front surface of a substrate. Also, the invention relates to a thermal transfer recording medium having a heat-resistant lubricous protective layer formed by applying the heat-resistant lubricity imparting coating agent on the front surface of a substrate film, and a heat sensitive ink layer on the back surface thereof.

### BACKGROUND ART

Many thermal transfer recording media have been proposed which include a heat-resistant lubricous protective layer on the front surface of a substrate film and a heat sensitive ink layer on the back surface thereof. In such thermal transfer recording media, the formation of the heat-resistant lubricous protective layer on the front surface of the substrate film in contact with a thermal head can prevent sticking. The term "sticking" described herein means a phenomenon in which the substrate film is partially melted by heat of the thermal head, and a melted material is fixed to the thermal head, or wrinkles occur in the substrate film, thereby causing defective feeding of the thermal transfer recording medium (see, for example, Patent documents 1, 2, 3, and 4).

Patent Document 1: Jpn. examined patent publication No. 5-39796(1993)
Patent Document 2: Jpn. examined patent publication No. 6-33006(1994)
Patent Document 3: Jpn. unexamined patent publication No. 2-274596(1990)
Patent Document 4: Jpn. unexamined patent publication No. 10-297123(1998)
EP 978 541 describes compositions comprising vinyl methyl siloxanes and one or more synthetic resin(s).

As disclosed in the patent document 1, a heat-resistant lubricous protective layer is formed by curing a coating agent which includes a polymer containing 1 to 100% by mole of an acrylic acid ester or a methacrylate ester of a higher alcohol having a carbon number of 12 or more.
In the patent document 2, a heat-resistant lubricous protective layer is formed by curing the acrylic acid ester or methacrylate ester of the higher alcohol having a carbon number of 12 or more, and a copolymer containing a monomer made of the acrylic acid ester or methacrylate ester derivative with the thermosetting functional group, by heating or radical polymerization.

The thermal transfer recording media as disclosed in the patent documents 1 and 2, however, make it difficult to provide enough lubricity, and cannot prevent sticking sufficiently. In contrast, in order to have better lubricity, if the rate of the acrylic acid ester component or methacrylate ester component of the higher alcohol having a carbon number of 12 or more is increased, the unreacted acrylic acid ester or methacrylate ester component of the higher alcohol having a carbon number of 12 or more may be included largely in the heat-resistant lubricous protective layer. This is likely to induce sticking readily. Furthermore, since a glass transition point of the medium is decreased, there may occur blocking, that is, a phenomenon in which a component included in the heat-resistant lubricous protective layer is transferred and stuck to the front surface of an ink layer when the thermal transfer recording medium is wound up to bring the protective layer in contact with the ink layer.

### DISCLOSURE OF THE INVENTION

On the other hand, in the patent document 3, a heat-resistant lubricous protective layer is formed by applying a sticking prevention agent containing a polydimethylsiloxane graft copolymer. In the patent document 4, the heat-resistant lubricous protective layer is formed by applying a sticking prevention agent containing a polydimethylsiloxane block copolymer. Thus, in the patent documents 3 and 4, the use of the copolymer containing a silicone component improves the lubricity as compared to in the patent documents 1 and 2.
However, in the thermal transfer recording media disclosed in the patent documents 3 and 4, since the inclusion of the silicone component leads to a decrease in strength of the heat-resistant lubricous protective layer, the protective layer may be cut away due to friction with a thermal head and heat softening, to cause chips, which may be stuck and fusion-bonded to the thermal head. This may result in defective printing, including addition of unnecessary lines in a print, and unclear printing.

The invention has been accomplished in view of the above-mentioned problems, and it is an object of the invention to provide a heat-resistant lubricity imparting coating agent that can form a heat-resistant lubricous protective layer with good heat resistance and lubricity which will hardly cause the chips due to contact with the thermal head, and which will hardly allow the chips to stick to and be fusion-bonded to the head, and a thermal transfer recording medium having the heat-resistant lubricous protective layer.

To solve the above problems, the present invention provides a heat-resistant lubricity imparting coating agent according to claim 1 and a thermal transfer recording medium according to claim 7. Preferred embodiments are defined in the subclaims.

In the following, the term "polydimethylsiloxane copolymer" denotes the term "vinyl/polydimethylsiloxane-copolymer", the term "polydimethylsiloxane graft copolymer" denotes the term "vinyl/polydimethylsiloxane-graft-copolymer" and the term "polydimethylsiloxane block copolymer" denotes the term "vinyl/polydimethylsiloxane-block-copolymer".

In one aspect of the invention, a heat-resistant lubricity imparting coating agent contains a polydimethylsiloxane copolymer which includes a long chain alkyl group having a carbon number of 12 or more. Accordingly, the use of such a heat-resistant lubricity imparting coating agent enables the formation of a heat-resistant lubricous protective layer with good heat resistance and lubricity which will hardly cause chips due to contact with the thermal head, and which will hardly allow the chips to stick to and be fusion-bonded to the head (hereinafter referred to as the occurrence of head chippings). That is, in the one aspect of the invention, the heat-resistant lubricity imparting coating agent can be used to provide the thermal transfer recording medium with good heat resistance and lubricity which will hardly cause the head chippings.

The copolymer contained in the heat-resistant lubricity imparting agent of the invention may be either a graft copolymer or a block copolymer, or a combination of two or more different types of copolymers.
The heat-resistant lubricity imparting coating agent of the invention may contain a binder resin, a solvent, and the like as well as the above-mentioned polydimethylsiloxane copolymer.

Further, preferably, in the heat-resistant lubricity imparting coating agent, the weight ratio of said long chain alkyl group having a carbon number of 12 or more to the polydimethylsiloxane copolymer is not less than 10% by weight nor more than 42% by weight.

The heat-resistant lubricity imparting coating agent of the invention includes the polydimethylsiloxane copolymer which contains the long chain alkyl group having a carbon number of 12 or more in an amount of not less than 10% by weight nor more than 42% by weight. Accordingly, such a heat-resistant lubricity imparting coating agent enables the appropriate formation of the heat-resistant lubricous protective layer with good heat resistance and lubricity which will hardly cause the chips due to contact with the thermal head, and which will hardly allow the chips to stick to and be fusion-bonded to the head.

Alternatively, in the heat-resistant lubricity imparting coating agent, preferably, when manufacturing the polydimethylsiloxane copolymer, the weight ratio of a vinyl monomer containing the long chain alkyl group having a carbon number of 12 or more to the entire monomers used in a copolymerization reaction is not less than 15% by weight nor more than 55% by weight.

The heat-resistant lubricity imparting coating agent of the invention includes the polydimethylsiloxane copolymer which is manufactured such that the weight ratio of a vinyl monomer containing the long chain alkyl group having a carbon number of 12 or more to the entire monomers used in a copolymerization reaction is not less than 15% by weight nor more than 55% by weight. Accordingly, the heat-resistant lubricity imparting coating agent containing such a polydimethylsiloxane copolymer enables the appropriate formation of the heat-resistant lubricous protective layer with good heat resistance and lubricity which will hardly cause the head chippings. More specifically, if the weight ratio of the vinyl monomer containing the long chain alkyl group having a carbon number of 12 or more is 15% by weight or more, the occurrence of the head chippings can be reduced effectively. In contrast, if the ratio of the long-chain alkyl group containing the vinyl monomer is 55% by weight or less, the amount of unreacted monomers can be decreased to effectively reduce the occurrence of blocking.
It should be noted that the vinyl monomers containing the long chain alkyl group having a carbon number of 12 or more may include, for example, lauryl methacrylate (having a carbon number of 12), stearyl methacrylate (having the carbon number of 18), and behenyl methacrylate (having the carbon number of 22). Not only one but also two or more of these may be contained.

Alternatively, the polydimethylsiloxane copolymer serving as the above heat-resistant lubricity imparting coating agent preferably contains the long chain alkyl group having the carbon number of not less than 16 nor more than 20.

This heat-resistant lubricity imparting coating agent can form the heat-resistant lubricous protective layer with good heat resistance and lubricity which will hardly cause sticking, offset, and blocking, as well as head chippings. In particular, since the polydimethylsiloxane copolymer contains the long chain alkyl group having the carbon number of 18, the occurrence of sticking, offset, blocking, and head chippings can be reduced most effectively. The term "offset" described herein means a phenomenon in which an unreacted component included in the heat-resistant lubricous protective layer is transferred and stuck to the front surface of the substrate film on which the ink layer is to be formed later when the thermal transfer recording medium is wound up after forming the heat-resistant lubricous protective layer in manufacturing the thermal transfer recording medium.

More preferably, in the above-mentioned heat-resistant lubricity imparting coating agent, the weight ratio of the long chain alkyl group having the carbon number of not less than 16 nor more than 20 to the polydimethylsiloxane copolymer is not less than 10% by weight nor more than 42% by weight.

This heat-resistant lubricity imparting coating agent enables the appropriate formation of the heat-resistant lubricous protective layer with good heat resistance and lubricity which will hardly cause sticking, offset, and blocking, as well as head chippings. Particularly, the long chain alkyl group having the carbon number of 18 is contained in the amount of not less than 10% by weight nor more than 42% by weight in the polydimethylsiloxane copolymer, which can reduce the occurrence of sticking, offset, blocking, and head chippings most effectively.

Alternatively, in the above-mentioned heat-resistant lubricity imparting coating agent, when manufacturing the polydimethylsiloxane copolymer, the weight ratio of the vinyl monomer containing the long chain alkyl group having the carbon number of not less than 16 nor more than 20 to the entire monomers used in the copolymerization reaction is preferably not less than 15% by weight nor more than 55% by weight.

The heat-resistant lubricity imparting coating agent containing such a polydimethylsiloxane copolymer enables the appropriate formation of the heat-resistant lubricous protective layer with good heat resistance and lubricity which will hardly cause sticking, offset, and blocking, as well as head chippings. More specifically, when the vinyl monomer with the long chain alkyl group having the carbon number of not less than 16 nor more than 20 is contained in an amount of 15% by weight or more, the occurrence of head chippings can be reduced effectively. In contrast, when the long-chain alkyl group containing the vinyl monomer is contained in an amount of 55% by weight or less, the amount of unreacted monomers can be decreased to effectively reduce the occurrence of blocking.
Particularly, if the weight ratio of the vinyl monomer with the long chain alkyl group having the carbon number of 18 to the monomers used in the copolymerization reaction is not less than 15% by weight nor more than 55% by weight, the occurrence of sticking, offset, blocking, and head chippings can be reduced most effectively.

The heat-resistant lubricity imparting coating agent as described above preferably contains a binder made of a resin.

The heat-resistant lubricity imparting coating agent of the invention includes the binder made of a resin. The use of such a heat-resistant lubricity imparting coating agent can improve the strength of the heat-resistant lubricous protective layer, thereby further decreasing more the possibility of occurrence of chips due to contact with the thermal head, or of adhesion and fusion-bonding of the chips to the head.

In any one of the heat-resistant lubricity imparting agents described above, the polydimethylsiloxane copolymer is preferably a polydimethylsiloxane graft copolymer which is obtained by copolymerization of at least the vinyl monomer containing the long chain alkyl group having a carbon number of 12 or more with the polydimethylsiloxane compound containing a polymerizable vinyl group at one end thereof.
The polydimethylsiloxane compound containing the polymerizable vinyl group at one end thereof is represented by the following structural formula. 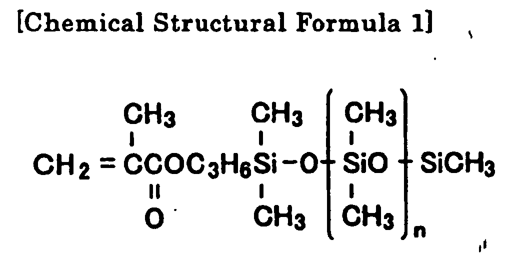 where n is an integer number of 0 to 64.

In cases where the reactivity between the monomers is bad in manufacturing the polydimethylsiloxane copolymer, the heat-resistant lubricity imparting coating agent may contain much the unreacted components (polyimethylsiloxane, vinyl monomers, or the like). Thus, if such a heat-resistant lubricity imparting coating agent is used to form the heat-resistant lubricous protective layer, many unreacted components may be contained in the heat-resistant lubricous protective layer. This may cause the unreacted components included in the heat-resistant lubricous protective layer to be transferred to and stuck to the front surface of the substrate film (hereinafter referred to as "offset"), on which the ink layer is to be formed later, when the thermal transfer recording medium is wound up after forming the protective layer in manufacturing the medium. Thus, when the heat sensitive ink is later applied onto the front surface of the substrate film, parts with the nonreacted components stuck thereto may reject the ink.
When the thermal transfer recording medium is wound up to bring the heat-resistant lubricous protective layer in contact with the ink layer, the unreacted components included in the protective layer may be transferred to and stuck to the surface of the ink layer (that is, blocking may occur), resulting in defective transfer printing.

In contrast, the polydimethylsiloxane copolymer contained in the heat-resistant lubricity imparting coating agent of the invention is a graft copolymer obtained by copolymerization of at least the vinyl monomer containing the long chain alkyl group having a carbon number of 12 or more with the polydimethylsiloxane compound containing the polymerizable vinyl group at one end thereof. When manufacturing the polydimethylsiloxane graft copolymer, the use of the above-mentioned measures improves the reactivity between the monomers to decrease the amount of unreacted components (polydimethylsiloxane compounds, vinyl monomers, and the like). Accordingly, the heat-resistant lubricity imparting coating agent of the invention can be used to reduce the content of the unreacted components in the heat-resistant lubricous protective layer, which can reduce the occurrence of offset and blocking.

It should be noted that the vinyl monomers with the long chain alkyl group having a carbon number of 12 or more to be used may include, for example, lauryl methacrylate (having a carbon number of 12), stearyl methacrylate (having the carbon number of 18), and behenyl methacrylate (having the carbon number of 22). Not only one but also two or more kinds of these may be copolymerized with one another.
When manufacturing the polydimethylsiloxane graft copolymer, in addition to the polydimethylsiloxane compound containing the polymerizable vinyl group at one end thereof, and the vinyl monomer containing the long chain alkyl group having a carbon number of 12 or more, the following vinyl monomer may be used for the copolymerization.

The copolymerizable vinyl monomers may include, for example, aliphatic or cyclic acrylate and/or methacrylate, such as methyl acrylate, ethyl acrylate, n-propyl acrylate, iso-propyl acrylate, n-butyl acrylate, iso-butyl acrylate, t-butyl acrylate, 2-ethyl hexyl acrylate, cyclohexyl acrylate, tetrahydrofurfuryl acrylate, stearyl acrylate, lauryl acrylate, methyl methacrylate, ethyl methacrylate, n-propyl methacrylate, iso-propyl methacrylate, n-butyl methacrylate, iso-butyl methacrylate, 2-ethyl hexyl methacrylate, cyclohexyl methacrylate, and tetrahydrofurfuryl methacrylate. Also, the copolymerizable vinyl monomers may include, for example, vinyl ethers, such as methyl vinyl ether, ethyl vinyl ether, n-propyl vinyl ether, n-butyl vinyl ether, and iso-butyl vinyl ether; styrenes, such as styrene, and α-methyl styrene; and a nitrile monomer, such as acrylonitrile, and methacrylonitrile. Furthermore, the copolymerizable vinyl monomers may include, for example, fatty acid vinyls, such as vinyl acetate, and vinyl propionate; and halogen containing monomers, such as vinyl chloride, vinylidene chloride, vinyl fluoride, and vinylidene fluoride. Moreover, the copolymerizable vinyl monomers may include, for example, olefins, such as ethylene, propylene, and isoprene; dienes, such as chloroprene, and butadiene; α,β-unsaturated carboxylic acids, such as acrylic acid, methacrylic acid, itaconic acid, maleic acid, maleic anhydride, crotonic acid, atropic acid, and citraconic acid; and amides, such as acrylamide, methacrylamide, N,N-methylol acrylamide, N,N-dimethyl acrylamide, diacetone acrylamide, and methylacrylamide glycolate methyl ether. Further, the copolymerizable vinyl monomers may include, for example, amino group containing monomers, such as N,N-dimethyl amino ethyl methacrylate, N,N-diethyl amino ethyl methacrylate, N,N-dimethyl amino propyl methacrylate, N,N-dimethyl amino ethyl acrylate, N,N-diethyl amino ethyl acrylate, and N,N-dimethyl amino propyl acrylate; and epoxy group containing monomers, such as glycidyl acrylate, glycidyl methacrylate, and glycidyl allyl ether. In addition, the copolymerizable vinyl monomers may include, for example, 2-hydroxy ethyl methacrylate, 2-hydroxy ethyl acrylate, 2-hydroxy propyl methacrylate, 2-hydroxy propyl acrylate, 4-hydroxy butyl acrylate, allyl alcohol, reaction products between Cardura E (trade name, manufactured by Shell Chemicals, Inc.) and any one of acrylic acid, methacrylic acid, itaconic acid, maleic acid, and crotonic acid, vinyl pyrolidone, vinyl pyridine, and vinyl carbazole. The other vinyl monomers with a hydrolyzable silyl group may include, for example, silane coupling agents, such as γ-methacryloxypropyltrimethoxysilane, γ-methacryloxypropyltriethoxysilane, γ-methacryloxypropylmethyldimethoxysilane, γ-methacryloxypropylmethyldiethoxysilane, γ-methacryloxypropylmethoxyethoxysilane, vinyltrimethoxysilane, and vinyltriethoxysilane. Note that not only one but also two or more kinds of vinyl monomers mentioned above may be copolymerized with one another.

Alternatively, in any one of the above-mentioned heat-resistant lubricity imparting coating agents, preferably, the polydimethylsiloxane copolymer is a polydimethylsiloxane block copolymer which is obtained by copolymerization of at least an azo-group-containing polydimethylsiloxane amide serving as a polymerization initiator with the vinyl monomer containing the long chain alkyl group having a carbon number of 12 or more.
The azo-group-containing polydimethylsiloxane amide is represented by the following structural formula. 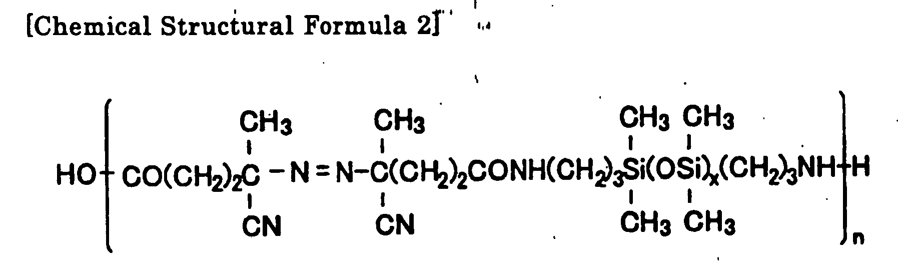 where x is an integer number of 10 to 300, and n is an integer number of 1 to 50.

The polydimethylsiloxane copolymer contained in the heat-resistant lubricity imparting coating agent of the invention is a block copolymer which is obtained by copolymerization of at least an azo-group-containing polydimethylsiloxane amide serving as a polymerization initiator with the vinyl monomer containing the long chain alkyl group having a carbon number of 12 or more. In manufacturing the polydimethylsiloxane block copolymer, since the azo-group-containing polydimethylsiloxane amide including a silicon component is used as the initiator, the silicon does not remain as an unreacted component. The use of the heat-resistant lubricity imparting coating agent according to the invention does not leave behind the unreacted silicon component in the heat-resistant lubricous protective layer. This heat-resistant lubricity imparting coating agent of the invention which contains the above-mentioned block copolymer can reduce the occurrence of offset and blocking efficiently, as compared to the heat-resistant lubricity imparting coating agent containing the polydimethylsiloxane graft copolymer described above.

It should be noted that the vinyl monomers with the long chain alkyl group having a carbon number of 12 or more to be used may include, for example, lauryl methacrylate (having a carbon number of 12), stearyl methacrylate (having the carbon number of 18), and behenyl methacrylate (having the carbon number of 22), as is the case with the graft copolymer described above. Not only one but also two or more kinds of these may be copolymerized with one another.
When manufacturing the polydimethylsiloxane block copolymer, in addition to the azo-group-containing polydimethylsiloxane amide, and the vinyl monomer containing the long chain alkyl group having a carbon number of 12 or more, the vinyl monomer which is the same as that in the above-mentioned graft copolymer may be used for the copolymerization.

Further, in any one of the above-mentioned heat-resistant lubricity imparting coating agents, preferably, a silicon component is contained only in molecules of the polydimethylsiloxane copolymer.

In the heat-resistant lubricity imparting coating agent of the invention, the silicon component (polydimethylsiloxane) does not exist individually (or, is not released). Thus, the heat-resistant lubricity imparting coating agent of the invention is used to form the heat-resistant lubricous protective layer, whereby the occurrence of offset or blocking can be reduced effectively, as compared with the heat-resistant lubricity imparting coating agent containing the above-mentioned polydimethylsiloxane graft copolymer.

Such a heat-resistant lubricity imparting coating agent can be manufactured by the following steps. First, for example, in a solvent, such as toluene, or methyl ethyl ketone, the azo-group-containing polydimethylsiloxane amide which is a polymerization initiator is copolymerized with at least the vinyl monomer containing the long chain alkyl group having a carbon number of 12 or more to produce the polydimethylsiloxane block copolymer. Then, to a resin solution containing the thus-obtained polydimethylsiloxane block copolymer is added the solvent, such as methyl ethyl ketone, thereby manufacturing the heat-resistant lubricity imparting coating agent.

According to another aspect, the present invention provides a thermal transfer recording medium, comprising: a substrate film having the front surface and the back surface thereof; an ink layer formed on the front surface of the substrate film; and a heat-resistant lubricous protective layer formed on the back surface of the substrate film, wherein said heat-resistant lubricous protective layer includes a polydimethylsiloxane copolymer containing a long chain alkyl group having a carbon number of 12 or more.

A thermal transfer recording medium of the invention is provided with the heat-resistant lubricous protective layer which includes a polydimethylsiloxane copolymer containing the long chain alkyl group having a carbon number of 12 or more. Such a heat-resistant lubricous protective layer can improve the heat resistance and lubricity of the recording medium, while decreasing the possibility of occurrence of chips due to contact with the thermal head, or of adhesion and fusion-bonding of the chips to the head.

The heat-resistant lubricous protective layer of the invention may contain a binder resin or the like as well as the above-mentioned polydimethylsiloxane copolymer. The above polydimethylsiloxane copolymer may be either the graft copolymer or the block copolymer, or a combination of two or more different types of copolymers.
The heat-resistant lubricous protective layer can be formed by applying the heat-resistant lubricity imparting coating agent containing the above-mentioned polydimethylsiloxane copolymer on the back surface of the substrate film. This heat-resistant lubricity imparting coating agent may contain the binder resin, the solvent, and the like as well as the above-mentioned copolymer.

The substrate film to be used may be a film made of engineering plastics, such as polyethylene, polypropylen, polyvinyl chloride, polyvinyliden chloride, polyester, polyamide, polyimide, polyethylene terephthalate, polycarbonate, polyacetal, polyphenylene oxide; a plastic film made of cellophane or the like; or a film made of cellulose derivatives.

In the above-mentioned thermal transfer recording medium, further preferably, the weight ratio of said long chain alkyl group having a carbon number of 12 or more to the polydimethylsiloxane copolymer is not less than 10% by weight nor more than 42% by weight.

The thermal transfer recording medium of the invention is provided with the heat-resistant lubricous protective layer including the polydimethylsiloxane copolymer which contains the long chain alkyl group having a carbon number of 12 or more in an amount of not less than 10% by weight nor more than 42% by weight. Such a heat-resistant lubricous protective layer can improve the heat resistance and lubricity of the recording medium, while decreasing the possibility of occurrence of the head chippings.

Alternatively, in the thermal transfer recording medium, preferably, said heat-resistant lubricous protective layer is formed by applying a heat-resistant lubricity imparting coating agent containing the polydimethylsiloxane copolymer, said polydimethylsiloxane copolymer being manufactured such that the weight ratio of a vinyl monomer containing the long chain alkyl group having a carbon number of 12 or more to the entire monomers used in a copolymerization reaction is not less than 15% by weight nor more than 55% by weight in manufacturing the polydimethylsiloxane copolymer.

In the thermal transfer recording medium of the invention, the heat-resistant lubricous protective layer is formed by applying the heat-resistant lubricity imparting coating agent containing the polydimethylsiloxane copolymer, which is manufactured such that the weight ratio of the vinyl monomer containing the long chain alkyl group having a carbon number of 12 or more to the entire monomers used in the copolymerization reaction is not less than 15% by weight nor more than 55% by weight. The thus-obtained heat-resistant lubricous protective layer can improve the heat resistance and lubricity of the recording medium, while decreasing the possibility of occurrence of the head chippings.

Alternatively, in the above-mentioned thermal transfer recording medium, the polydimethylsiloxane copolymer may preferably contain the long chain alkyl group having the carbon number of not less than 16 nor more than 20.

This thermal transfer recording medium is provided with the heat-resistant lubricous protective layer containing the polydimethylsiloxane copolymer which contains the long chain alkyl group having the carbon number of not less than 16 nor more than 20. Such a heat-resistant lubricous protective layer can improve the heat resistance and lubricity of the recording medium, while decreasing the possibility of occurrence of sticking, offset, and blocking as well as the head chippings. Particularly, when the polydimethylsiloxane copolymer contains the long alkyl group having the carbon number of 18, the occurrence of sticking, offset, blocking, and head chippings can be reduced most effectively.

More preferably, in the above-mentioned recording medium, the weight ratio of the long chain alkyl group having the carbon number of not less than 16 nor more than 20 to the polydimethylsiloxane copolymer is not less than 10% by weight nor more than 42% by weight.

The thermal transfer recording medium is provided with the heat-resistant lubricous protective layer including the polydimethylsiloxane copolymer which contains the long chain alkyl group having the carbon number of not less than 16 nor more than 20 in an amount of not less than 10% by weight nor more than 42% by weight. Such a heat-resistant lubricous protective layer can improve the heat resistance and lubricity of the recording medium, while decreasing the possibility of occurrence of sticking, offset, and blocking, and especially of occurrence of the head chippings. Particularly, the long chain alkyl group having the carbon number of 18 is contained in the amount of not less than 10% by weight nor more than 42% by weight in the polydimethylsiloxane copolymer, which can reduce the occurrence of sticking, offset, blocking, and head chippings most effectively.

Alternatively, more preferably, in the thermal transfer recording medium, the heat-resistant lubricous protective layer is formed by applying the heat-resistant lubricity imparting coating agent containing the polydimethylsiloxane copolymer, which is manufactured such that the weight ratio of the vinyl monomer containing the long chain alkyl group having the carbon number of 16 to 20 to the entire monomers used in the copolymerization reaction is not less than 15% by weight nor more than 55% by weight in manufacturing the polydimethylsiloxane copolymer.

Such a heat-resistant lubricous protective layer can improve the heat resistance and lubricity of the recording medium, while decreasing the possibility of occurrence of sticking, offset, and blocking, and especially of occurrence of the head chippings.

In any one of the above-mentioned thermal transfer recording media, the heat-resistant lubricous protective layer may contain the binder made of a resin.

The thermal transfer recording medium of the invention is provided with the heat-resistant lubricous protective layer containing the binder resin. The inclusion of the binder resin can improve the strength of the heat-resistant lubricous protective layer, thereby further decreasing the possibility of occurrence of chips due to contact with the thermal head, and of adhesion and fusion-bonding of the chips to the head.

Further, in any one of the above-mentioned thermal transfer recording medium, preferably, the polydimethylsiloxane copolymer is a polydimethylsiloxane graft copolymer which is obtained by copolymerization of at least the vinyl monomer containing the long chain alkyl group having a carbon number of 12 or more with a polydimethylsiloxane compound containing a polymerizable vinyl group at one end thereof.

The polydimethylsiloxane copolymer included in the heat-resistant lubricous protective layer in the thermal transfer recording medium of the invention is a graft copolymer which is obtained by copolymerization of at least the vinyl monomer containing the long chain alkyl group having a carbon number of 12 or more with the polydimethylsiloxane compound containing the polymerizable vinyl monomer at one end thereof. When manufacturing the polydimethylsiloxane graft copolymer, the use of the above-mentioned measures improves the reactivity between the monomers to decrease the amount of unreacted components (polydimethylsiloxane compounds, and vinyl monomers). Accordingly, the thermal transfer recording medium of the invention can be used to decrease the content of the unreacted components in the heat-resistant lubricous protective layer, thereby reducing the occurrence of offset and blocking.

Alternatively, in any one of the above-mentioned thermal transfer recording medium, preferably, the polydimethylsiloxane copolymer is a polydimethylsiloxane block copolymer which is obtained by copolymerization of at least an azo-group-containing polydimethylsiloxane amide serving as a polymerization initiator with the vinyl monomer containing the long chain alkyl group having a carbon number of 12 or more.

Alternatively, the polydimethylsiloxane copolymer included in the heat-resistant lubricous protective layer in the thermal transfer recording medium of the invention is the polydimethylsiloxane block copolymer which is obtained by copolymerization of at least the azo-group-containing polydimethylsiloxane amide serving as the polymerization initiator with the vinyl monomer containing the long chain alkyl group having a carbon number of 12 or more. In manufacturing the polydimethylsiloxane block copolymer, since the azo-group-containing polydimethylsiloxane amide including the silicon component is used as the initiator, the silicon does not remain as an unreacted component. Accordingly, in the thermal transfer recording medium of the invention, no unreacted silicon components (polydimethylsiloxane compound) are included in the heat-resistant lubricous protective layer. This, thermal transfer recording medium can further reduce the occurrence of offset and blocking efficiently, as compared to the thermal transfer recording medium provided with the heat-resistant lubricous protective layer containing the polydimethylsiloxane graft copolymer described above.

Further, in any one of the above-mentioned thermal transfer recording medium, preferably, the heat-resistant lubricous protective layer contains a silicon component only in molecules of the polydimethylsiloxane copolymer.

In the thermal transfer recording medium of the invention, the silicon component (polydimethylsiloxane) does not exist individually in the heat-resistant lubricous protective layer. Thus, this recording medium can reduce the occurrence of offset and blocking effectively, as compared with the thermal transfer recording medium provided with the heat-resistant lubricous protective layer containing the polydimethylsiloxane graft copolymer described above.

Such a heat-resistant lubricous protective layer can be formed by applying on the back surface of the substrate film, the heat-resistant lubricity imparting coating agent containing the polydimethylsiloxane block copolymer, which is obtained by copolymerization of at least the azo-group-containing polydimethylsiloxane amide serving as the polymerization initiator with the vinyl monomer containing the long chain alkyl group having a carbon number of 12 or more.

### BRIEF DESCRIPTION OF DRAWINGS

Fig. 1 is a table showing components (components of resin solutions 1 to 11) for use in manufacturing graft copolymers 1 to 11;
Fig. 2 is a table showing components for use in manufacturing Examples 1 to 10, and Comparative Examples 1 to 3;
Fig. 3 is a table showing components (components of resin solutions 12 to 22) for use in manufacturing block copolymers 1 to 11;
Fig. 4 is a table showing components for use in manufacturing Examples 11 to 20, and Comparative Examples 4 to 6;
Fig. 5 is a table showing test results of Examples 1 to 10;
Fig. 6 is a table showing test results of Examples 11 to 20; and
Fig. 7 is a table showing test results of Comparative Examples 1 to 6.

### BEST MODE FOR CARRYING OUT THE INVENTION

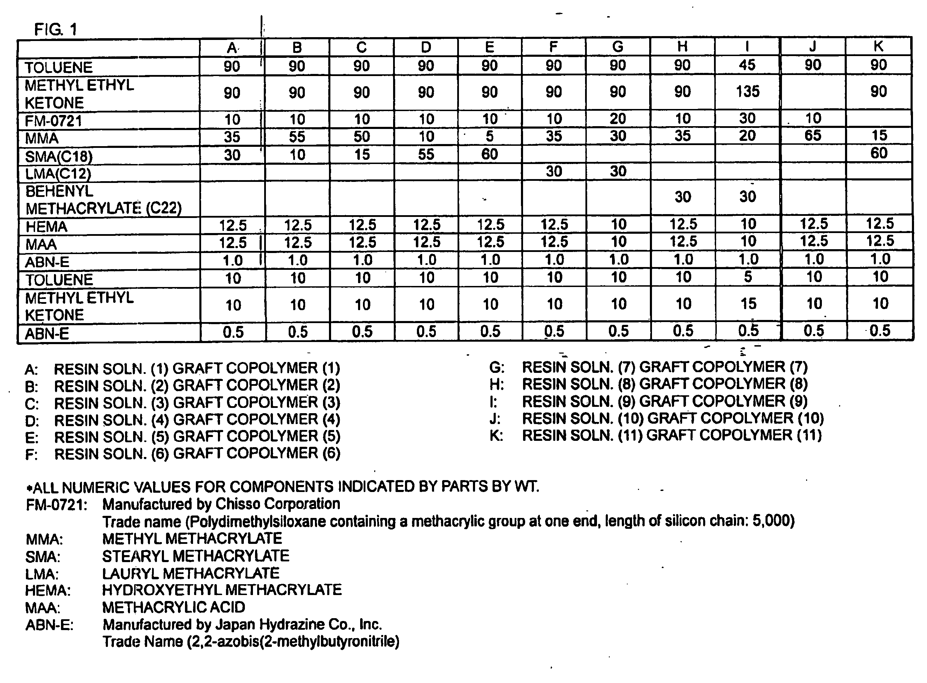

Now, Examples 1 to 20 of the invention will be described in detail, compared with Comparative Examples 1 to 6.
In the present examples, nine kinds of polidimethylsiloxane graft copolymers (graft copolymers 1 to 9) were used to manufacture ten kinds of heat-resistant lubricity imparting coating agents (Examples 1 to 10). Furthermore, nine kinds of polidimethylsiloxane block copolymers (block copolymers 1 to 9) were used to manufacture ten kinds of heat-resistant lubricity imparting coating agents (Examples 11 to 20) (see Figs. 1 to 4). As comparative examples, two kinds of polidimethylsiloxane graft copolymers (graft copolymers 10 and 11) were used to manufacture three kinds of heat-resistant lubricity imparting coating agents (Comparative Examples 1 to 3). Furthermore, two kinds of polidimethylsiloxane block copolymers (block copolymers 10 and 11) were used to manufacture three kinds of heat-resistant lubricity imparting coating agents (Comparative Examples 4 to 6) (see Figs. 1 to 4).

First, as shown in Fig. 1, 11 kinds of polydimethylsiloxane graft copolymers (graft copolymers 1 to 11) were manufactured.

### (Manufacturing of Graft Copolymer 1)

First, to a 500 ml flask equipped with a stirrer, a thermometer, a condenser, a nitrogen introducing pipe, and a monomer drop layer, were added 90 parts by weight (hereinafter simply referred to as "parts") of toluene, 90 parts of methyl ethyl ketone, and 10 parts of FM-0721 (manufactured by Chisso Corporation, trade name: polydimethylsiloxane containing a methacrylic group at one end, length of silicon chain 5,000), and the flask was heated to 80°C. Then, 30 parts of stearyl methacrylate (SMA), 35 parts of methyl methacrylate (MMA), 12.5 parts of hydroxyethyl methacrylate, 12.5 parts of methacrylic acid, and 1.0 part of ABN-E (manufactured by Japan Hydrazine Co., Inc., trade name: 2,2-azobis(2-methylbutyronitrile)) were dropped into the flask over about two hours, followed by polymerization for two hours. Thereafter, 0.5 parts of ABN-E, 10 parts of toluene, and 10 parts of methyl ethyl ketone were dropped into the reaction product, and further polymerized for three hours. Thus, a resin solution 1 (solid content: 33.3%) containing a graft copolymer 1 was obtained.

### (Manufacturing of Graft Copolymer 2)

A resin solution 2 (solid content: 33.3%) containing a graft copolymer 2 was obtained using the same manufacturing method as that of the above-mentioned graft copolymer 1, except that the amount of methyl methacrylate was 55 parts, and the amount of stearyl methacrylate was 10 parts.

### (Manufacturing of Graft Copolymer 3)

A resin solution 3 (solid content: 33.3%) containing a graft copolymer 3 was obtained using the same manufacturing method as that of the above-mentioned graft copolymer 1, except that the amount of methyl methacrylate was 50 parts, and the amount of stearyl methacrylate was 15 parts.

### (Manufacturing of Graft Copolymer 4)

A resin solution 4 (solid content: 33.3%) containing a graft copolymer 4 was obtained using the same manufacturing method as that of the above-mentioned graft copolymer 1, except that the amount of methyl methacrylate was 10 parts, and the amount of stearyl methacrylate was 55 parts.

### (Manufacturing of Graft Copolymer 5)

A resin solution 5 (solid content: 33.3%) containing a graft copolymer 5 was obtained using the same manufacturing method as that of the above-mentioned graft copolymer 1, except that the amount of methyl methacrylate was 5 parts, and the amount of stearyl methacrylate was 60 parts.

### (Manufacturing of Graft Copolymer 6)

A resin solution 6 (solid content: 33.3%) containing a graft copolymer 6 was obtained using the same manufacturing method as that of the above-mentioned graft copolymer 1, except that 30 parts of lauryl methacrylate (LMA) was dropped instead of 30 parts of stearyl methacrylate.

### (Manufacturing of Graft Copolymer 7)

A resin solution 7 (solid content: 33.3%) containing a graft copolymer 7 was obtained using the same manufacturing method as that of the above-mentioned graft copolymer 1, except that the amount of FM-0721 was 20 parts, the amount of methyl methacrylate was 30 parts, the amount of hydroxyethyl methacrylate was 10 parts, the amount of methacrylic acid was 10 parts, and 30 parts of lauryl methacrylate was dropped instead of 30 parts of stearyl methacrylate.

### (Manufacturing of Graft Copolymer 8)

A resin solution 8 (solid content: 33.3%) containing a graft copolymer 8 was obtained using the same manufacturing method as that of the above-mentioned graft copolymer 1, except that 30 parts of behenyl methacrylate was dropped instead of 30 parts of stearyl methacrylate.

### (Manufacturing of Graft Copolymer 9)

Using the same equipment as that in the manufacturing method of the graft copolymer 1 described above, 45 parts of toluene, 135 parts of methyl ethyl ketone, and 30 parts of FM-0721 were charged into the flask, and the flask was heated to 80°C. Then, 30 parts of behenyl methacrylate, 20 parts of methyl methacrylate, 10 parts of hydroxyethyl methacrylate, 10 parts of methacrylic acid, and 1.0 part of ABN-E (manufactured by Japan Hydrazine Co., Inc., trade name: 2,2-azobis(2-methylbutyronitrile)) were dropped into the flask over about two hours, followed by polymerization for two hours. Thereafter, 0.5 part of ABN-E, 5 parts of toluene, and 15 parts of methyl ethyl ketone were dropped into the reaction product, and polymerized for three hours. Thus, a resin solution 9 (solid content: 33.3%) containing a graft copolymer 9 was obtained.

### (Manufacturing of Graft Copolymer 10)

A resin solution 10 (solid content: 33.3%) containing a graft copolymer 10 was obtained by the same polymerization as that in the manufacturing method of the above-mentioned graft copolymer 1, except that the amount of methyl methacrylate was 65 parts without adding 90 parts of methyl ethyl ketone and the stearyl methacrylate.

### (Manufacturing of Graft Copolymer 11)

A resin solution 11 (solid content: 33.3%) containing a graft copolymer 11 was manufactured by the same polymerization as that in the manufacturing method of the above-mentioned graft copolymer 1, except that the amount of methyl methacrylate was 15 parts, and the amount of stearyl methacrylate was 60 parts without adding FM-0721.

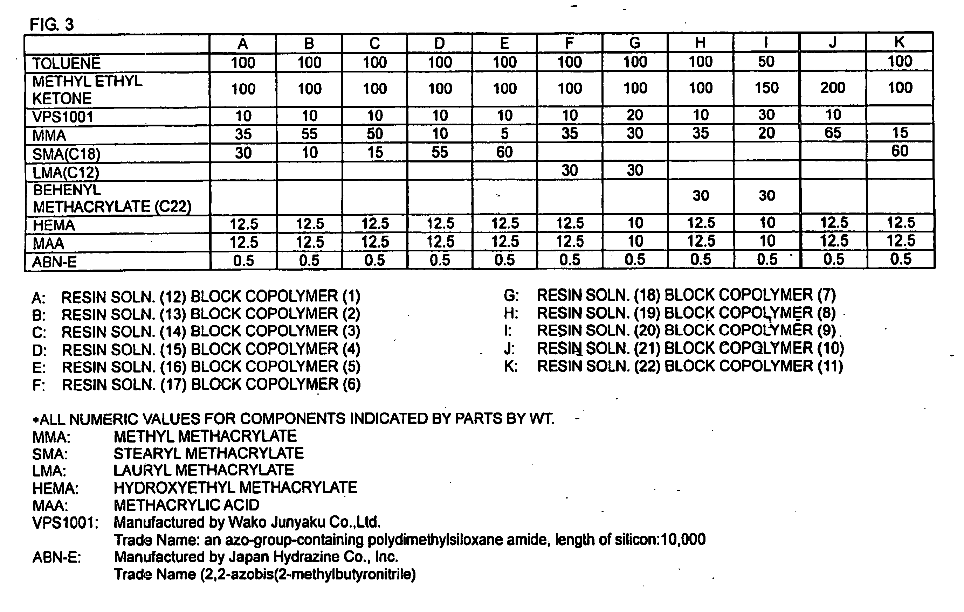

Then, as shown in Fig. 3, 11 kinds of polydimethylsiloxane block copolymers (block copolymers 1 to 11) were manufactured.

### (Manufacturing of Block Copolymer 1)

Using the same equipment as that in the manufacturing method of the graft copolymer 1 described above, 100 parts of toluene, 100 parts of methyl ethyl ketone, 30 parts of stearyl methacrylate, 35 parts of methyl methacrylate, 12.5 parts of hydroxyethyl methacrylate, 12.5 parts of methacrylic acid, and 10 parts of VPS1001 (manufactured by Wako Junyaku Co.,Ltd., trade name: an azo-group-containing polydimethylsiloxane amide, length of silicon:10,000) were charged into the flask, and stirred to obtain the uniformly dispersed solution. The flask was heated to 80°C, followed by five hours of polymerization. Then, 0.5 part of ABN-E (manufactured by Japan Hydrazine Co., Inc., trade name: 2,2-azobis(2-methylbutyronitrile)) was dropped into the flask, and polymerized for two hours. Thus, a resin solution 12 (solid content: 33.3%) containing a block copolymer 1 was obtained.

### (Manufacturing of Block Copolymer 2)

A resin solution 13 (solid content: 33.3%) containing a block copolymer 2 was obtained using the same manufacturing method as that of the above-mentioned block copolymer 1, except that the amount of methyl methacrylate was 55 parts, and the amount of stearyl methacrylate was 10 parts.

### (Manufacturing of Block Copolymer 3)

A resin solution 14 (solid content: 33.3%) containing a block copolymer 3 was obtained using the same manufacturing method as that of the above-mentioned block copolymer 1, except that the amount of methyl methacrylate was 50 parts, and the amount of stearyl methacrylate was 15 parts.

### (Manufacturing of Block Copolymer 4)

A resin solution 15 (solid content: 33.3%) containing a block copolymer 4 was obtained using the same manufacturing method as that of the above-mentioned block copolymer 1, except that the amount of methyl methacrylate was 10 parts, and the amount of stearyl methacrylate was 55 parts.

### (Manufacturing of Block Copolymer 5)

A resin solution 16 (solid content: 33.3%) containing a block copolymer 5 was obtained using the same manufacturing method as that of the above-mentioned block copolymer 1, except that the amount of methyl methacrylate was 5 parts, and the amount of stearyl methacrylate was 60 parts.

### (Manufacturing of Graft Copolymer 6)

A resin solution 17 (solid content: 33.3%) containing a graft copolymer 6 was obtained using the same manufacturing method as that of the above-mentioned graft copolymer 1, except that 30 parts of lauryl methacrylate was dropped instead of 30 parts of stearyl methacrylate.

### (Manufacturing of Block Copolymer 7)

A resin solution 18 (solid content: 33.3%) containing a block copolymer 7 was obtained by the same polymerization as that in the manufacturing method of the above-mentioned block copolymer 1, except that the amount of methyl methacrylate was 30 parts, the amount of hydroxyethyl methacrylate was 10 parts, the amount of methacrylic acid was 10 parts, the amount of VPS1001 was 20 parts, and 30 parts of lauryl methacrylate was dropped instead of 30 parts of stearyl methacrylate.

### (Manufacturing of Block Copolymer 8)

A resin solution 19 (solid content: 33.3%) containing a block copolymer 8 was obtained using the same manufacturing method as that of the above-mentioned block copolymer 1, except that 30 parts of behenyl methacrylate was dropped instead of 30 parts of stearyl methacrylate.

### (Manufacturing of Block Copolymer 9)

A resin solution 20 (solid content: 33.3%) containing a block copolymer 9 was obtained by the same polymerization as that in the manufacturing method of the above-mentioned block copolymer 1, except that the amount of toluene was 50 parts, the amount of methyl ethyl ketone was 150 parts, the amount of methyl methacrylate was 20 parts, the amount of hydroxyethyl methacrylate was 10 parts, the amount of methacrylic acid was 10 parts, the amount of VPS1001 was 30 parts, and 30 parts of behenyl methacrylate was dropped instead of 30 parts of stearyl methacrylate.

### (Manufacturing of Block Copolymer 10)

A resin solution 21 (solid content: 33.3%) containing a block copolymer 10 was obtained by the same polymerization as that in the manufacturing method of the above-mentioned block copolymer 1, except that the amount of methyl ethyl ketone was 200 parts, and the amount of methyl methacrylate was 65 parts without adding 100 parts of toluene and stearyl methacrylate.

### (Manufacturing of Block Copolymer 11)

A resin solution 22 (solid content: 33.3%) containing a block copolymer 11 was obtained by the same polymerization as that in the manufacturing method of the above-mentioned block copolymer 1, except that the amount of methyl methacrylate was 15 parts, and the amount of stearyl methacrylate was 60 parts without adding VPS1001.

### Example 1

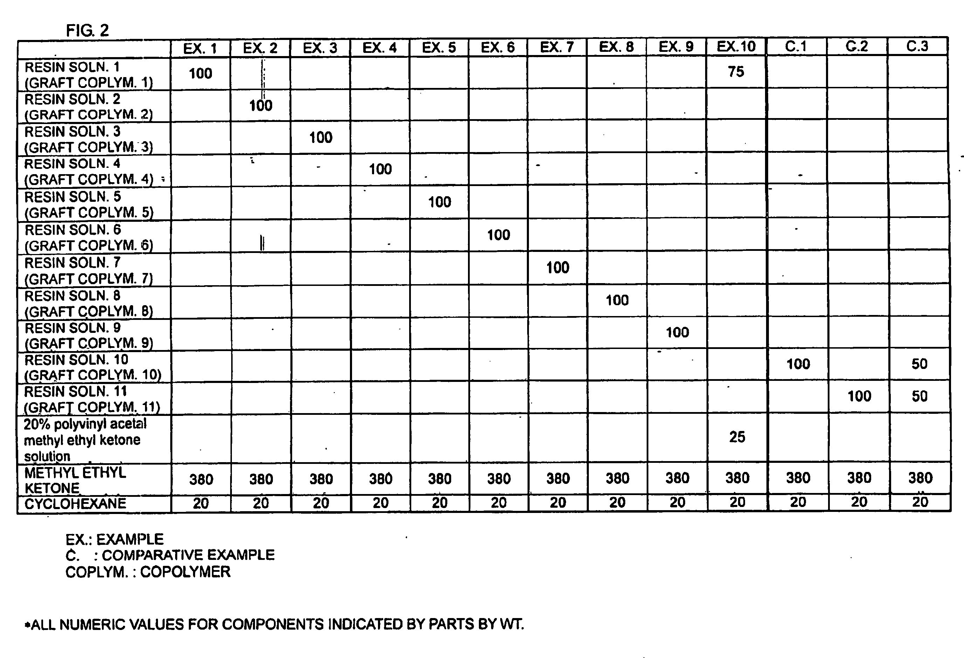

As shown in Fig. 2, a combined solvent made of 380 parts of methyl ethyl ketone and 20 parts of cyclohexanone was added to 100 parts of the resin solution 1 (containing the graft copolymer 1) to manufacture a heat-resistant lubricity imparting coating agent (solid content: 5%).
Note that when manufacturing the graft copolymer 1 contained in the heat-resistant lubricity imparting coating agent, the weight ratio of the vinyl monomer containing the long chain alkyl group having the carbon number of 18 (for example, stearyl methacrylate) to the entire monomers used in the copolymerization reaction is 30% by weight (30 parts/ 100 parts) (see Fig. 1). The graft copolymer 1 contained in the heat-resistant lubricity imparting coating agent thus obtained includes about 22.4% by weight of the long chain alkyl group having the carbon number of 18.

Then, the heat-resistant lubricity imparting coating agent was applied on the back surface of a PET film of 4.5 µm in thickness, and heated and dried at 100°C for one minute to form the heat-resistant lubricous protective layer (graft copolymer 1) having a thickness of 0.3 µm. Thereafter, onto the front surface of the PET film, heat sensitive ink made of 8 parts of paraffin wax, 10 parts of carnauba wax, and 6 parts of carbon black was applied to form an ink layer of 4.0 µm in thickness, thereby manufacturing a thermal transfer recording medium.

### Example 2

As shown in Fig. 2, the same combined solvent as that in Example 1 was added to 100 parts of the resin solution 2 (containing the graft copolymer 2) to manufacture a heat-resistant lubricity imparting coating agent (solid content: 5%). Note that when manufacturing the graft copolymer 2 contained in the heat-resistant lubricity imparting coating agent, the weight ratio of the vinyl monomer containing the long chain alkyl group having the carbon number of 18 (for example, stearyl methacrylate) to the entire monomers used in the copolymerization reaction was 10% by weight (10 parts/ 100 parts) (see Fig. 1). The graft copolymer 2 contained in the heat-resistant lubricity imparting coating agent thus obtained included about 7.5% by weight of the long chain alkyl group having the carbon number of 18.

Then, using the heat-resistant lubricity imparting coating agent, in the same way as that in Example 1, a heat-resistant lubricous protective layer (graft copolymer 2) of 0.3 µm in thickness was formed on the back surface of the PET film, and the ink layer of 4.0 µm in thickness was formed on the front surface of the PET film, thereby manufacturing a thermal transfer recording medium.

### Example 3

As shown in Fig. 2, the same combined solvent as that in Example 1 was added to 100 parts of the resin solution 3 (containing the graft copolymer 3) to manufacture a heat-resistant lubricity imparting coating agent (solid content: 5%). Note that when manufacturing the graft copolymer 3 contained in the heat-resistant lubricity imparting coating agent, the weight ratio of the vinyl monomer containing the long chain alkyl group having the carbon number of 18 (for example, stearyl methacrylate) to the entire monomers used in the copolymerization reaction was 15% by weight (15 parts/ 100 parts) (see Fig. 1). The graft copolymer 3 contained in the heat-resistant lubricity imparting coating agent thus obtained included about 11.2 % by weight of the long chain alkyl group having the carbon number of 18.

Then, using the heat-resistant lubricity imparting coating agent, in the same way as that in Example 1, a heat-resistant lubricous protective layer (graft copolymer 3) of 0.3 µm in thickness was formed on the back surface of the PET film, and the ink layer of 4.0 µm in thickness was formed on the front surface of the PET film, thereby manufacturing a thermal transfer recording medium.

### Example 4

As shown in Fig. 2, the same combined solvent as that in Example 1 was added to 100 parts of the resin solution 4 (containing the graft copolymer 4) to manufacture a heat-resistant lubricity imparting coating agent (solid content: 5%). Note that when manufacturing the graft copolymer 4 contained in the heat-resistant lubricity imparting coating agent, the weight ratio of the vinyl monomer containing the long chain alkyl group having the carbon number of 18 (for example, stearyl methacrylate) to the entire monomers used in the copolymerization reaction was 55 % by weight (55 parts/ 100 parts) (see Fig. 1). The graft copolymer 4 contained in the heat-resistant lubricity imparting coating agent thus obtained included about 41.1 % by weight of the long chain alkyl group having the carbon number of 18.

Then, using the heat-resistant lubricity imparting coating agent, in the same way as that in Example 1, a heat-resistant lubricous protective layer (graft copolymer 4) of 0.3 µm in thickness was formed on the back surface of the PET film, and the ink layer of 4.0 µm in thickness was formed on the front surface of the PET film, thereby manufacturing a thermal transfer recording medium.

### Example 5

As shown in Fig. 2, the same combined solvent as that in Example 1 was added to 100 parts of the resin solution 5 (containing the graft copolymer 5) to manufacture a heat-resistant lubricity imparting coating agent (solid content: 5%). Note that when manufacturing the graft copolymer 5 contained in the heat-resistant lubricity imparting coating agent, the weight ratio of the vinyl monomer containing the long chain alkyl group having the carbon number of 18 (for example, stearyl methacrylate) to the entire monomers used in the copolymerization reaction was 60 % by weight (60 parts/ 100 parts) (see Fig. 1). The graft copolymer 5 contained in the heat-resistant lubricity imparting coating agent thus obtained included about 44.9 % by weight of the long chain alkyl group having the carbon number of 18.

Then, using the heat-resistant lubricity imparting coating agent, in the same way as that in Example 1, a heat-resistant lubricous protective layer (graft copolymer 5) of 0.3 µm in thickness was formed on the back surface of the PET film, and the ink layer of 4.0 µm in thickness was formed on the front surface of the PET film, thereby manufacturing a thermal transfer recording medium.

### Example 6

As shown in Fig. 2, the same combined solvent as that in Example 1 was added to 100 parts of the resin solution 6 (containing the graft copolymer 6) to manufacture a heat-resistant lubricity imparting coating agent (solid content: 5%). Note that when manufacturing the graft copolymer 6 contained in the heat-resistant lubricity imparting coating agent, the weight ratio of the vinyl monomer containing the long chain alkyl group having the carbon number of 12 (for example, lauryl methacrylate) to the entire monomers used in the copolymerization reaction was 30 % by weight (30 parts/ 100 parts) (see Fig. 1). The graft copolymer 6 contained in the heat-resistant lubricity imparting coating agent thus obtained included about 21.1 % by weight of the long chain alkyl group having the carbon number of 12.

Then, using the heat-resistant lubricity imparting coating agent, in the same way as that in Example 1, a heat-resistant lubricous protective layer (graft copolymer 6) of 0.3 µm in thickness was formed on the back surface of the PET film, and the ink layer of 4.0 µm in thickness was formed on the front surface of the PET film, thereby manufacturing a thermal transfer recording medium.

### Example 7

As shown in Fig. 2, the same combined solvent as that in Example 1 was added to 100 parts of the resin solution 7 (containing the graft copolymer 7) to manufacture a heat-resistant lubricity imparting coating agent (solid content: 5%). Note that when manufacturing the graft copolymer 7 contained in the heat-resistant lubricity imparting coating agent, the weight ratio of the vinyl monomer containing the long chain alkyl group having the carbon number of 12 (for example, lauryl methacrylate) to the entire monomers used in the copolymerization reaction was 30 % by weight (30 parts/ 100 parts) (see Fig. 1). The graft copolymer 7 contained in the heat-resistant lubricity imparting coating agent thus obtained included about 21.1 % by weight of the long chain alkyl group having the carbon number of 12.

Then, using the heat-resistant lubricity imparting coating agent, in the same way as that in Example 1, a heat-resistant lubricous protective layer (graft copolymer 7) of 0.3 µm in thickness was formed on the back surface of the PET film, and the ink layer of 4.0 µm in thickness was formed on the front surface of the PET film, thereby manufacturing a thermal transfer recording medium.

### Example 8

As shown in Fig. 2, the same combined solvent as that in Example 1 was added to 100 parts of the resin solution 8 (containing the graft copolymer 8) to manufacture a heat-resistant lubricity imparting coating agent (solid content: 5%). Note that when manufacturing the graft copolymer 8 contained in the heat-resistant lubricity imparting coating agent, the weight ratio of the vinyl monomer containing the long chain alkyl group having the carbon number of 22 (for example, behenyl methacrylate) to the entire monomers used in the copolymerization reaction was 30 % by weight (30 parts/ 100 parts) (see Fig. 1). The graft copolymer 8 contained in the heat-resistant lubricity imparting coating agent thus obtained included about 23.5 % by weight of the long chain alkyl group having the carbon number of 22.

Then, using the heat-resistant lubricity imparting coating agent, in the same way as that in Example 1, a heat-resistant lubricous protective layer (graft copolymer 8) of 0.3 µm in thickness was formed on the back surface of the PET film, and the ink layer of 4.0 µm in thickness was formed on the front surface of the PET film, thereby manufacturing a thermal transfer recording medium.

### Example 9

As shown in Fig. 2, the same combined solvent as that in Example 1 was added to 100 parts of the resin solution 9 (containing the graft copolymer 9) to manufacture a heat-resistant lubricity imparting coating agent (solid content: 5%). Note that when manufacturing the graft copolymer 9 contained in the heat-resistant lubricity imparting coating agent, the weight ratio of the vinyl monomer containing the long chain alkyl group having the carbon number of 22 (for example, behenyl methacrylate) to the entire monomers used in the copolymerization reaction was 30 % by weight (30 parts/ 100 parts) (see Fig. 1). The graft copolymer 9 contained in the heat-resistant lubricity imparting coating agent thus obtained included about 23.5 % by weight of the long chain alkyl group having the carbon number of 22.

Then, using the heat-resistant lubricity imparting coating agent, in the same way as that in Example 1, a heat-resistant lubricous protective layer (graft copolymer 9) of 0.3 µm in thickness was formed on the back surface of the PET film, and the ink layer of 4.0 µm in thickness was formed on the front surface of the PET film, thereby manufacturirig a thermal transfer recording medium.

### Example 10

As shown in Fig. 2, into 75 parts of the resin solution 1 (containing the graft copolymer 1), were added 25 parts of 20% polyvinyl acetal methyl ethyl ketone solution as well as the same combined solvent in that in Example 1 to obtain a dilute solution diluted up to 5 % of solid content.
Then, using the heat-resistant lubricity imparting coating agent, in the same way as that in Example 1, a heat-resistant lubricous protective layer (graft copolymer 1 + binder resin) of 0.3 µm in thickness was formed on the back surface of the PET film, and the ink layer of 4.0 µm in thickness was formed on the front surface of the PET film, thereby manufacturing a thermal transfer recording medium.

### Example 11

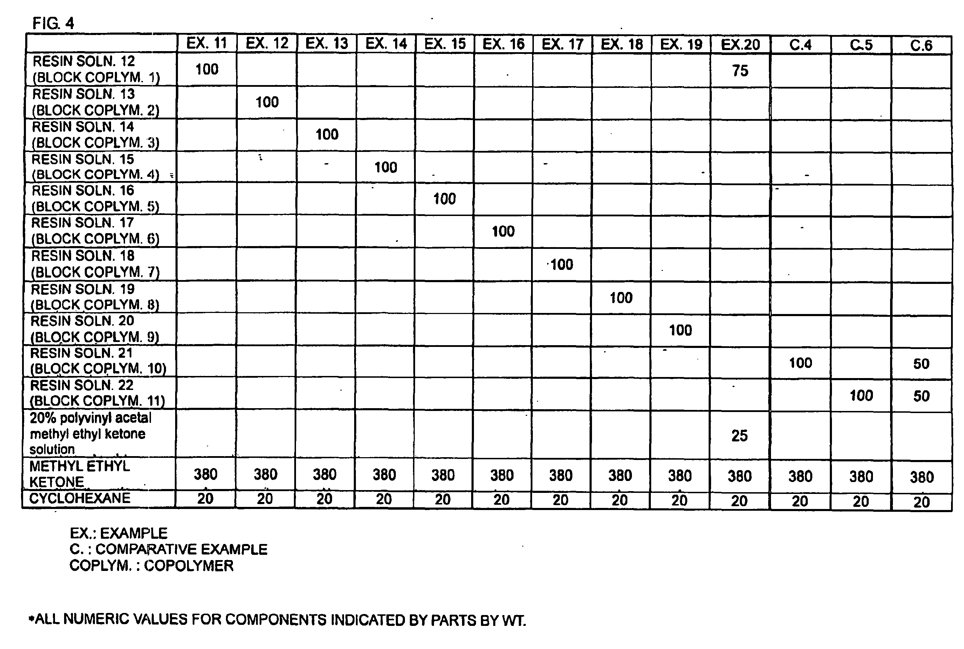

As shown in Fig. 4, the same combined solvent as that in Example 1 was added to 100 parts of the resin solution 12 (containing the block copolymer 1) to manufacture a heat-resistant lubricity imparting coating agent (solid content: 5%).
Note that when manufacturing the block copolymer 1 contained in the heat-resistant lubricity imparting coating agent, the weight ratio of the vinyl monomer containing the long chain alkyl group having the carbon number of 18 (for example, stearyl methacrylate) to the entire monomers used in the copolymerization reaction was 30 % by weight (30 parts/ 100 parts) (see Fig. 3). The block copolymer 1 contained in the heat-resistant lubricity imparting coating agent thus obtained included about 22.4 % by weight of the long chain alkyl group having the carbon number of 18.
Also, the heat-resistant lubricity imparting coating agent contained a silicon component only in molecules of the block copolymer 1.

Then, using the heat-resistant lubricity imparting coating agent, in the same way as that in Example 1, a heat-resistant lubricous protective layer (block copolymer 1) of 0.3 µm in thickness was formed on the back surface of the PET film, and the ink layer of 4.0 µm in thickness was formed on the front surface of the PET film, thereby manufacturing a thermal transfer recording medium. The heat-resistant lubricous protective layer in Example 11 contained a silicon component only in molecules of the block copolymer 1.

### Example 12

As shown in Fig. 4, the same combined solvent as that in Example 1 was added to 100 parts of the resin solution 13 (containing the block copolymer 2) to manufacture a heat-resistant lubricity imparting coating agent (solid content: 5%).
Note that when manufacturing the block copolymer 2 contained in the heat-resistant lubricity imparting coating agent, the weight ratio of the vinyl monomer containing the long chain alkyl group having the carbon number of 18 (for example, stearyl methacrylate) to the entire monomers used in the copolymerization reaction was 10 % by weight (10 parts/ 100 parts) (see Fig. 3). The block copolymer 2 contained in the heat-resistant lubricity imparting coating agent thus obtained included about 7.5 % by weight of the long chain alkyl group having the carbon number of 18.
Also, the heat-resistant lubricity imparting coating agent contained a silicon component only in molecules of the block copolymer 2.

Then, using the heat-resistant lubricity imparting coating agent, in the same way as that in Example 1, a heat-resistant lubricous protective layer (block copolymer 2) of 0.3 µm in thickness was formed on the back surface of the PET film, and the ink layer of 4.0 µm in thickness was formed on the front surface of the PET film, thereby manufacturing a thermal transfer recording medium. The heat-resistant lubricous protective layer in Example 12 contained a silicon component only in molecules of the block copolymer 2.

### Example 13

As shown in Fig. 4, the same combined solvent as that in Example 1 was added to 100 parts of the resin solution 14 (containing the block copolymer 3) to manufacture a heat-resistant lubricity imparting coating agent (solid content: 5%).
Note that when manufacturing the block copolymer 3 contained in the heat-resistant lubricity imparting coating agent, the weight ratio of the vinyl monomer containing the long chain alkyl group having the carbon number of 18 (for example, stearyl methacrylate) to the entire monomers used in the copolymerization reaction was 15% by weight (15 parts/ 100 parts) (see Fig. 3). The block copolymer 3 contained in the heat-resistant lubricity imparting coating agent thus obtained included about 11.2% by weight of the long chain alkyl group having the carbon number of 18.
Also, the heat-resistant lubricity imparting coating agent contained a silicon component only in molecules of the block copolymer 3.

Then, using the heat-resistant lubricity imparting coating agent, in the same way as that in Example 1, a heat-resistant lubricous protective layer (block copolymer 3) of 0.3 µm in thickness was formed on the back surface of the PET film, and the ink layer of 4.0 µm in thickness was formed on the front surface of the PET film, thereby manufacturing a thermal transfer recording medium. The heat-resistant lubricous protective layer in Example 13 contained a silicon component only in molecules of the block copolymer 3.

### Example 14

As shown in Fig. 4, the same combined solvent as that in Example 1 was added to 100 parts of the resin solution 15 (containing the block copolymer 4) to manufacture a heat-resistant lubricity imparting coating agent (solid content: 5%).
Note that when manufacturing the block copolymer 4 contained in the heat-resistant lubricity imparting coating agent, the weight ratio of the vinyl monomer containing the long chain alkyl group having the carbon number of 18 (for example, stearyl methacrylate) to the entire monomers used in the copolymerization reaction was 55% by weight (55 parts/ 100 parts) (see Fig. 3). The block copolymer 4 contained in the heat-resistant lubricity imparting coating agent thus obtained included about 41.1% by weight of the long chain alkyl group having the carbon number of 18.
Also, the heat-resistant lubricity imparting coating agent contained a silicon component only in molecules of the block copolymer 4.

Then, using the heat-resistant lubricity imparting coating agent, in the same way as that in Example 1, a heat-resistant lubricous protective layer (block copolymer 4) of 0.3 µm in thickness was formed on the back surface of the PET film, and the ink layer of 4.0 µm in thickness was formed on the front surface of the PET film, thereby manufacturing a thermal transfer recording medium. The heat-resistant lubricous protective layer in Example 14 contained a silicon component only in molecules of the block copolymer 4.

### Example 15

As shown in Fig. 4, the same combined solvent as that in Example 1 was added to 100 parts of the resin solution 16 (containing the block copolymer 5) to manufacture a heat-resistant lubricity imparting coating agent (solid content: 5%).
Note that when manufacturing the block copolymer 5 contained in the heat-resistant lubricity imparting coating agent, the weight ratio of the vinyl monomer containing the long chain alkyl group having the carbon number of 18 (for example, stearyl methacrylate) to the entire monomers used in the copolymerization reaction was 60% by weight (60 parts/ 100 parts) (see Fig. 3). The block copolymer 5 contained in the heat-resistant lubricity imparting coating agent thus obtained included about 44.9% by weight of the long chain alkyl group having the carbon number of 18.
Also, the heat-resistant lubricity imparting coating agent contained a silicon component only in molecules of the block copolymer 5.

Then, using the heat-resistant lubricity imparting coating agent, in the same way as that in Example 1, a heat-resistant lubricous protective layer (block copolymer 5) of 0.3 µm in thickness was formed on the back surface of the PET film, and the ink layer of 4.0 µm in thickness was formed on the front surface of the PET film, thereby manufacturing a thermal transfer recording medium. The heat-resistant lubricous protective layer in Example 15 contained a silicon component only in molecules of the block copolymer 5.

### Example 16

As shown in Fig. 4, the same combined solvent as that in Example 1 was added to 100 parts of the resin solution 17 (containing the block copolymer 6) to manufacture a heat-resistant lubricity imparting coating agent (solid content: 5%).
Note that when manufacturing the block copolymer 6 contained in the heat-resistant lubricity imparting coating agent, the weight ratio of the vinyl monomer containing the long chain alkyl group having the carbon number of 12 (for example, lauryl methacrylate) to the entire monomers used in the copolymerization reaction was 30% by weight (30 parts/ 100 parts) (see Fig. 3). The block copolymer 6 contained in the heat-resistant lubricity imparting coating agent thus obtained included about 21.1% by weight of the long chain alkyl group having the carbon number of 12.
Also, the heat-resistant lubricity imparting coating agent contained a silicon component only in molecules of the block copolymer 6.

Then, using the heat-resistant lubricity imparting coating agent, in the same way as that in Example 1, a heat-resistant lubricous protective layer (block copolymer 6) of 0.3 µm in thickness was formed on the back surface of the PET film, and the ink layer of 4.0 µm in thickness was formed on the front surface of the PET film, thereby manufacturing a thermal transfer recording medium. The heat-resistant lubricous protective layer in Example 16 contained a silicon component only in molecules of the block copolymer 6.

### Example 17

As shown in Fig. 4, the same combined solvent as that in Example 1 was added to 100 parts of the resin solution 18 (containing the block copolymer 7) to manufacture a heat-resistant lubricity imparting coating agent (solid content: 5%).
Note that when manufacturing the block copolymer 7 contained in the heat-resistant lubricity imparting coating agent, the weight ratio of the vinyl monomer containing the long chain alkyl group having the carbon number of 12 (for example, lauryl methacrylate) to the entire monomers used in the copolymerization reaction was 30% by weight (30 parts/ 100 parts) (see Fig. 3). The block copolymer 7 contained in the heat-resistant lubricity imparting coating agent thus obtained included about 21.1% by weight of the long chain alkyl group having the carbon number of 12.
Also, the heat-resistant lubricity imparting coating agent contained a silicon component only in molecules of the block copolymer 7.

Then, using the heat-resistant lubricity imparting coating agent, in the same way as that in Example 1, a heat-resistant lubricous protective layer (block copolymer 7) of 0.3 µm in thickness was formed on the back surface of the PET film, and the ink layer of 4.0 µm in thickness was formed on the front surface of the PET film, thereby manufacturing a thermal transfer recording medium. The heat-resistant lubricous protective layer in Example 17 contained a silicon component only in molecules of the block copolymer 7.

### Example 18

As shown in Fig. 4, the same combined solvent as that in Example 1 was added to 100 parts of the resin solution 19 (containing the block copolymer 8) to manufacture a heat-resistant lubricity imparting coating agent (solid content: 5%).
Note that when manufacturing the block copolymer 8 contained in the heat-resistant lubricity imparting coating agent, the weight ratio of the vinyl monomer containing the long chain alkyl group having the carbon number of 22 (for example, behenyl methacrylate) to the entire monomers used in the copolymerization reaction was 30% by weight (30 parts/ 100 parts) (see Fig. 3). The block copolymer 8 contained in the heat-resistant lubricity imparting coating agent thus obtained included about 23.5% by weight of the long chain alkyl group having the carbon number of 22.
Also, the heat-resistant lubricity imparting coating agent contained a silicon component only in molecules of the block copolymer 8.

Then, using the heat-resistant lubricity imparting coating agent, in the same way as that in Example 1, a heat-resistant lubricous protective layer (block copolymer 8) of 0.3 µm in thickness was formed on the back surface of the PET film, and the ink layer of 4.0 µm in thickness was formed on the front surface of the PET film, thereby manufacturing a thermal transfer recording medium. The heat-resistant lubricous protective layer in Example 18 contained a silicon component only in molecules of the block copolymer 8.

### Example 19

As shown in Fig. 4, the same combined solvent as that in Example 1 was added to 100 parts of the resin solution 20 (containing the block copolymer 9) to manufacture a heat-resistant lubricity imparting coating agent (solid content: 5%).
Note that when manufacturing the block copolymer 9 contained in the heat-resistant lubricity imparting coating agent, the weight ratio of the vinyl monomer containing the long chain alkyl group having the carbon number of 22 (for example, behenyl methacrylate) to the entire monomers used in the copolymerization reaction was 30% by weight (30 parts/ 100 parts) (see Fig. 3). The block copolymer 9 contained in the heat-resistant lubricity imparting coating agent thus obtained included about 23.5% by weight of the long chain alkyl group having the carbon number of 22.
Also, the heat-resistant lubricity imparting coating agent contained a silicon component only in molecules of the block copolymer 9.

Then, using the heat-resistant lubricity imparting coating agent, in the same way as that in Example 1, a heat-resistant lubricous protective layer (block copolymer 9) of 0.3 µm in thickness was formed on the back surface of the PET film, and the ink layer of 4.0 µm in thickness was formed on the front surface of the PET film, thereby manufacturing a thermal transfer recording medium. The heat-resistant lubricous protective layer in Example 19 contained a silicon component only in molecules of the block copolymer 9.

### Example 20 '

As shown in Fig. 4, into 75 parts of the resin solution 12 (containing the block copolymer 1), were added 25 parts of 20% polyvinyl acetal methyl ethyl ketone solution as well as the same combined solvent in that in Example 1 to obtain a heat-resistant lubricity imparting coating agent (solid content: 5%). The heat-resistant lubricity imparting coating agent contained a silicon component only in molecules of the block copolymer 1.
Then, using the heat-resistant lubricity imparting coating agent, in the same way as that in Example 1, a heat-resistant lubricous protective layer (block copolymer 1 + binder resin) of 0.3 µm in thickness was formed on the back surface of the PET film, and the ink layer of 4.0 µm in thickness was formed on the front surface of the PET film, thereby manufacturing a thermal transfer recording medium. As in Example 11, the heat-resistant lubricous protective layer in Example 20 contained a silicon component only in molecules of the block copolymer 1.

### (Comparative example 1)

As shown in Fig. 2, the same combined solvent as that in Example 1 was added to 100 parts of the resin solution 10 (containing the graft copolymer 10) to manufacture a heat-resistant lubricity imparting coating agent (solid content: 5%).
Then, using the heat-resistant lubricity imparting coating agent, in the same way as that in Example 1, a heat-resistant lubricous protective layer (graft copolymer 10) of 0.3 µm in thickness was formed on the back surface of the PET film, and the ink layer of 4.0 µm in thickness was formed on the front surface of the PET film, thereby manufacturing a thermal transfer recording medium.

### (Comparative example 2)

As shown in Fig. 2, the same combined solvent as that in Example 1 was added to 100 parts of the resin solution 11 (containing the graft copolymer 11) to manufacture a heat-resistant lubricity imparting coating agent (solid content: 5%).
Then, using the heat-resistant lubricity imparting coating agent, in the same way as that in Example 1, a heat-resistant lubricous protective layer (graft copolymer 11) of 0.3 µm in thickness was formed on the back surface of the PET film, and the ink layer of 4.0 µm in thickness was formed on the front surface of the PET film, thereby manufacturing a thermal transfer recording medium.

### (Comparative example 3)

As shown in Fig. 2, 50 parts of the resin solution 10 (containing the graft copolymer 10) and 50 parts of the resin solution 11 (containing the graft copolymer 11) were mixed. To this mixture, the same combined solvent as that in Example 1 was added to manufacture a heat-resistant lubricity imparting coating agent (solid content: 5%).
Then, using the heat-resistant lubricity imparting coating agent, in the same way as that in Example 1, a heat-resistant lubricous protective layer (graft copolymer 10 + graft copolymer 11) of 0.3 µm in thickness was formed on the back surface of the PET film, and the ink layer of 4.0 µm in thickness was formed on the front surface of the PET film, thereby manufacturing a thermal transfer recording medium.

### (Comparative example 4)

As shown in Fig. 4, the same combined solvent as that in Example 1 was added to 100 parts of the resin solution 21 (containing the block copolymer 10) to manufacture a heat-resistant lubricity imparting coating agent (solid content: 5%).
Then, using the heat-resistant lubricity imparting coating agent, in the same way as that in Example 1, a heat-resistant lubricous protective layer (block copolymer 10) of 0.3 µm in thickness was formed on the back surface of the PET film, and the ink layer of 4.0 µm in thickness was formed on the front surface of the PET film, thereby manufacturing a thermal transfer recording medium.

### (Comparative example 5)

As shown in Fig. 4, the same combined solvent as that in Example 1 was added to 100 parts of the resin solution 22 (containing the block copolymer 11) to manufacture a heat-resistant lubricity imparting coating agent (solid content: 5%).
Then, using the heat-resistant lubricity imparting coating agent, in the same way as that in Example 1, a heat-resistant lubricous protective layer (block copolymer 11) of 0.3 µm in thickness was formed on the back surface of the PET film, and the ink layer of 4.0 µm in thickness was formed on the front surface of the PET film, thereby manufacturing a thermal transfer recording medium.

### (Comparative example 6)

As shown in Fig. 4, 50 parts of the resin solution 21 (containing the block copolymer 10) and 50 parts of the resin solution 22 (containing the block copolymer 11) were mixed. To this mixture, the same combined solvent as that in Example 1 was added to manufacture a heat-resistant lubricity imparting coating agent (solid content: 5%).
Then, using the heat-resistant lubricity imparting coating agent, in the same way as that in Example 1, a heat-resistant lubricous protective layer (block copolymer 10 + block copolymer 11) of 0.3 µm in thickness was formed on the back surface of the PET film, and the ink layer of 4.0 µm in thickness was formed on the front surface of the PET film, thereby manufacturing a thermal transfer recording medium.

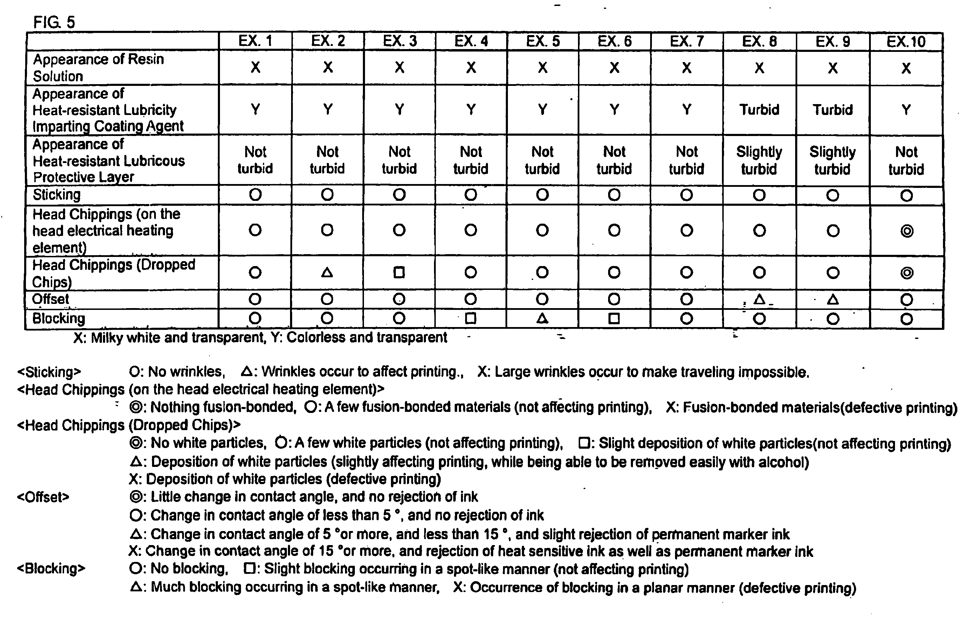

The thus-obtained thermal transfer recording media in Examples 1 to 20 and Comparative Examples 1 to 6 were evaluated for the following characteristics. Results were shown in Figs. 5, 6, and 7.

### (Appearance of Resin Solution)

First, the resin solutions used in the thermal transfer recording media of Examples 1 to 20 and Comparative Examples 1 to 6 were evaluated for appearance. As shown in Figs. 5, 6, and 7, the resin solutions used in Examples 1 to 20 and Comparative Examples 1 and 4, that is, the resin solutions 1 to 10, and 12 to 21 were milky white and transparent. The resin solutions used in Comparative Examples 2 and 5, that is, the resin solutions 11 and 22 were colorless and transparent.
In contrast, the resin solutions used in Comparative Examples 3 and 6, that is, a combination of the resin solutions 10 and 11, and a combination of the resin solutions 21 and 22 developed a white turbidity. The result shows that the compatibility between the resin solution 10 and the resin solution 11, and the compatibility between the resin solution 21 and the resin solution 22 were not good.

### (Appearance of Heat-resistant Lubricity Imparting Coating Agent)

Next, the heat-resistant lubricity imparting coating agents used in the thermal transfer recording media of Examples 1 to 20 and Comparative Examples 1 to 6 were evaluated for appearance. As shown in Figs. 5, 6, and 7, the heat-resistant lubricity imparting coating agent used in Example 7 became turbid, but the other coating agents were colorless and transparent.

### (Appearance of Heat-resistant Lubricous Protective Layer)

Then, the heat-resistant lubricous protective layers of Examples 1 to 20 and Comparative Examples 1 to 6 were evaluated for appearance. As shown in Figs. 5, 6, and 7, the protective layers of Examples 1 to 7, 10 to 17, and 20, and Comparative Examples 1, 2, 4, and 5 were had no turbidity. The protective layers of Examples 8, 9, 18, and 19 became turbid, but its turbidity was slight.
In contrast, the heat-resistant lubricous protective layers of the Comparative Examples 3 and 6 became turbid. This is considered to be because the compatibility between the resin solutions 10 and 11 included in Comparative Example 3 was not good, and the compatibility between the resin solutions 21 and 22 included in Comparative Example 6 was not good, resulting in the heterogeneous heat-resistant lubricous protective layer.

### (Sticking)

Then, the thermal transfer recording media of Examples 1 to 20 and Comparative Examples 1 to 6 were evaluated for sticking prevention property. More specifically, the recording media of Examples 1 to 20 and Comparative Examples 1 to 6 were mounted on a printer MR420SV (trade name, manufactured by SATO Corporation). With a printing density set to level 4, a printing speed to 8 inches, and a printing pattern to a CODE 39 longitudinal bar code, printing was carried out on a roll paper label. After printing, the thermal transfer recording media of Examples 1 to 20 and Comparative Examples 1 to 6 were evaluated for degrees of wrinkles, respectively.

As shown in Figs. 5, 6, and 7, in Examples 1 to 20 and Comparative Examples 1 and 4, good sticking prevention properties can be obtained without the occurrence of wrinkles.
In contrast, in Comparative Examples 2 and 5, large wrinkles occurred, making it impossible for the thermal transfer recording media to be traveled. This is considered to be because the heat-resistant lubricous protective layers of Comparative Examples 2 and 5 did not contain silicon components (polydimethylsiloxane), thereby not providing enough lubricity. Also, in Comparative Examples 3 and 6, wrinkles occurred, resulting in defective printing. This is because the compatibility between the resin solutions 10 and 11 constituting the heat-resistant lubricity imparting coating agent used in Comparative Example 3 was not good, and also the compatibility between the resin solutions 21 and 22 constituting the coating agent used in Comparative Example 6 was not good, thus failing to form the heat-resistant lubricous protective layer appropriately (that is, resulting in defective formation of film).

### (Head chippings)

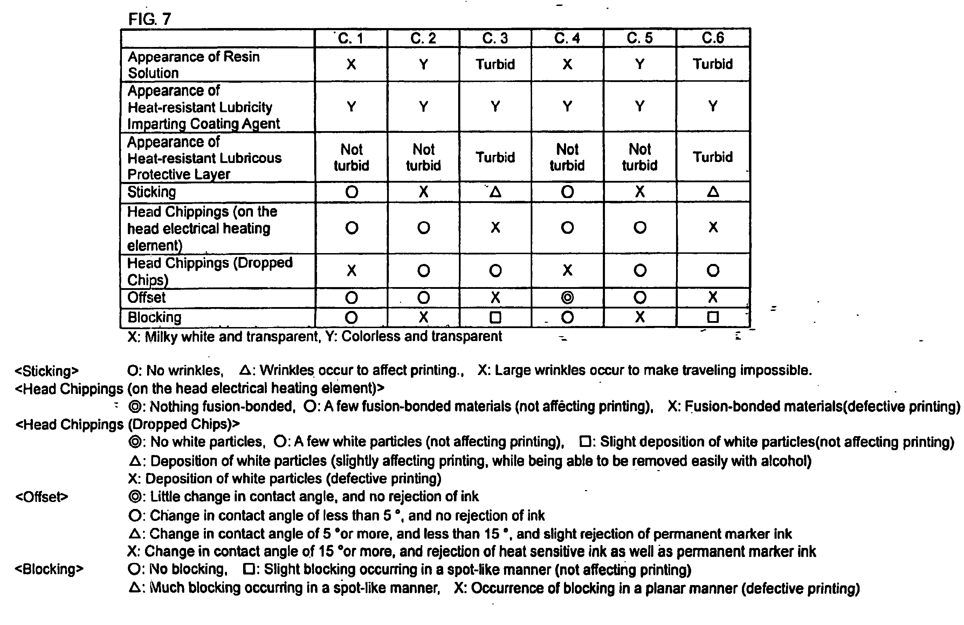

Then, Examples 1 to 20 and Comparative Examples 1 to 6 were evaluated for head chippings. More specifically, printing was carried out under the same conditions as that of the evaluation of sticking prevention property mentioned above, except that the printing speed was 4 inches (without head cleaning, and in continuous printing using a ribbon having a length of 30 m per reel). After being printed, the heat-resistant recording media of Examples 1 to 20 and Comparative Examples 1 to 6 were evaluated for degrees of the head chippings.
First, these recording media were examined for presence or absence of materials fusion-bonded on the thermal head. As shown in Fig. 7, in Comparative Examples 3 and 6, the fusion-bonded materials were baked on the thermal head, causing defective printing. The fusion-bonded materials were not able to be removed even with alcohol. This is considered to be because the heat-resistant lubricous protective layer was not able to be formed appropriately (that is, because of defective formation), as mentioned above.

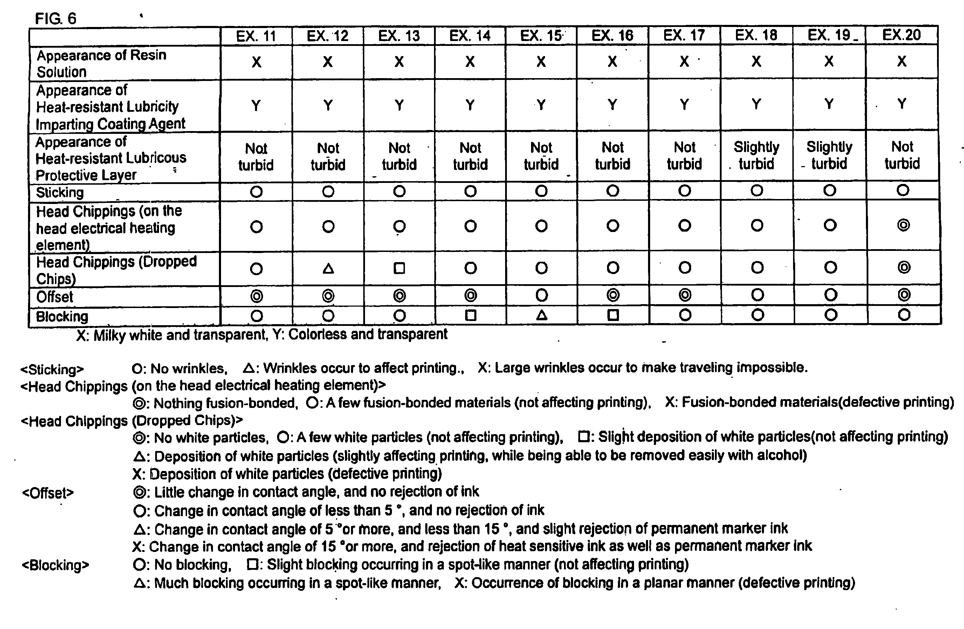

Furthermore, as shown in Figs. 5, and 6, in Examples 1 to 9, 11 to 19, and Comparative Examples 1, 2, 4, and 5, there were a few materials fusion-bonded on the head, not affecting printing. In contrast, in Examples 10 and 20, nothing was fusion-bonded on the head. This is considered to be because 20% polyvinyl acetal methyl ethyl ketone solution was added into the heat-resistant lubricity imparting coating agents of Examples 10 and 20, as shown in Figs.2 and 4. That is, in Examples 10 and 20, the inclusion of the binder resin in the heat-resistant lubricous protective layer can improve the strength of the protective layer, thereby preventing occurrence of chips due to friction with the thermal head.

Next, dropped chips (white particles) deposited on the rear part of the thermal head were examined. As shown in Fig. 7, in Comparative Examples 1 and 4, a lot of dropped chips (white particles) were deposited on the head, thus leading to the defective printing. This is considered to be because the graft and block copolymers 10 included in the respective heat-resistant lubricity imparting coating agents used in Comparative Examples 1 and 4 did not contain the long chain alkyl group having a carbon number of 12 or more, resulting in insufficient strength of the heat-resistant lubricous protective layers.

Furthermore, as shown in Figs. 5 and 6, although in Examples 2 and 12, the long chain alkyl group having a carbon number of 12 or more was included, the dropped chips (that is, white particles) were deposited on the head. This is because, in manufacturing the graft copolymer 2 and the block copolymer 2 contained in the heat-resistant lubricity imparting coating agents used in Examples 2 and 12, the weight ratio of the vinyl monomer containing the long chain alkyl group having a carbon number of 12 or more (for example, stearyl methacrylate) to the entire monomers used for the copolymerization reaction was 10% by weight, which was low. That is, it is considered that only 7.5% by weight of the long chain alkyl group having a carbon number of 12 or more was contained in the graft copolymer 2 and the block copolymer 2, resulting in insufficient strength of the heat-resistant lubricous protective layer. However, the dropped chips (white particles) deposited were able to be removed easily with alcohol, which was not problematic from a practical point of view.

In contrast, as shown in Figs. 5 and 6, although in Examples 3 and 13, there was slight deposition of the dropped chips (white particles) on the head, which did not affect the printing quality, and the dropped chips (white particle) were able to be removed easily with alcohol. Furthermore, in Examples 1, 4 to 9, 11, and 14 to 19, there occurred a few dropped chips (a few white particles) with no influence on the printing quality at all. This is because, as shown in Figs.1 and 3, in manufacturing the graft copolymers 1, 3 to 9, and the block copolymers 1, 3 to 9 contained in the heat-resistant lubricity imparting coating agents used in Examples 1, 3 to 9, 11, and 13 to 19, the weight ratio of the vinyl monomer containing the long chain alkyl group having a carbon number of 12 or more (e.g., the SMA having the carbon number of 18, the LMA having a carbon number of 12, or the behenyl methacrylate having the carbon number of 22) to the entire monomers used in the copolymerization reaction was not less than 15% by weight. That is, the inclusion of the long chain alkyl group having a carbon number of 12 or more in an amount of 10% by weight or more in the graft copolymers 1, 3 to 9, and in the block copolymers 1, 3 to 9 has improved the strength of the heat-resistant lubricous protective layer as compared to Examples 2 and 12.

Furthermore, also in Examples 10 and 20, no dropped chips (no white particles) occurred at all. This is because, in spite of the fact that the same graft or block copolymer 1 as that in Examples 1 or 11 was used, and in addition, by the inclusion of the binder resin in the heat-resistant lubricous protective layer, the strength of the heat-resistant lubricous protective layer was further improved as mentioned above, thereby reducing the occurrence of chips due to friction with the thermal head.

### (Offset)

Then, Examples 1 to 20 and Comparative Examples 1 to 6 were evaluated for the offset prevention property. More specifically, the heat transfer recording medium and a PET film were superimposed on each other such that the heat-resistant lubricous protective layer of the medium was in contact with the PET film. They were sandwiched between two glass plates, and heated at 50°C for 24 hours with a load of 2 kg/cm² being applied thereto. Then, on the contact surface of the PET film with the protective layer, a contact angle with respect to water was measured. Thus, a change in contact angle with respect to water before and after the test was examined. Furthermore, this contact surface was evaluated for rejection of ink when ink of a permanent marker, and heat sensitive ink (made of 8 parts of paraffin wax, 10 parts of carnauba wax, and 6 parts of carbon black) were applied thereto. The results were shown in Figs. 5, 6, and 7.

First, the results of Examples 1 to 10 having the heat-resistant lubricous protective layer made of the graft copolymer (see Fig. 5) were compared with those of Comparative Examples 1 to 3 (see Fig. 7). In Examples 1 to 7, and 10, and Comparative Examples 1 and 2, the change in contact angle with respect to water before and after the test was less than 5°, which resulted in no rejection of the heat sensitive ink and of the permanent marker ink, and in good offset prevention property of each medium.

In contrast, in Examples 8 and 9, the change in contact angle with respect to water before and after the test was 5° or more, and less than 15°, which caused rejection of the permanent marker ink. This is due to the following reason. Since the reactivity between the FM-0721 (polydimethylsiloxane containing the methacrylic group at one end) and the behenyl methacrylate was not good in manufacturing the graft copolymers 8 and 9 constituting the heat-resistant lubricous protective layers of Examples 8 and 9, the heat-resistant lubricous protective layers of Examples 8 and 9 contained the large amounts of unreacted polydimethylsiloxane and behenyl methacrylate, and these unreacted components were transferred to the front surface of the PET film. Furthermore, in Comparative Example 3, the change in contact angle with respect to water before and after the test was 15 °or more, thus causing rejection of the heat sensitive ink and the permanent marker ink. This is because the compatibility between the resin solutions 10 and 11 constituting the heat-resistant lubricity imparting coating agent used in Comparative Example 3 was not good, thereby the heat-resistant lubricous protective layer (resulting in defective formation)did not form appropriately, and a part of the protective layer was transferred to the front surface of the PET film.

Then, the results of Examples 11 to 20 having the heat-resistant lubricous protective layer made of the block copolymer (see Fig. 6) were compared with those of Comparative Examples 4 to 6 (see Fig. 7). In Examples 11 to 14, 16, 17, and 20, and Comparative Example 4, the change in contact angle with respect to water was little before and after the test, which resulted in no rejection of the heat sensitive ink and of the permanent marker ink, thereby very good offset prevention property of each medium was provided. In Examples 15, 18, and 19, and Comparative Example 5, the change in contact angle with respect to water before and after the test was less than five (5)°, which resulted in no rejection of the heat sensitive ink and of the permanent marker ink, thereby good offset prevention property of each medium was provided.

In contrast, in Comparative Example 6, the change in contact angle with respect to water before and after the test was 15 °or more, which was large, causing rejection of the permanent marker ink, and of the heat sensitive ink. Like in Comparative Example 3, this is because the compatibility between the resin solutions 21 and 22 constituting the heat-resistant lubricity imparting coating agent was not good, thereby the heat-resistant lubricous protective layer (resulting in defective formation)was not formed appropriately, and thus the part of the protective layer was transferred to the front surface of the PET film.

In general, when manufacturing the polydimethylsiloxane graft copolymer, the copolymerization reaction does not intend to proceed sufficiently, which causes many unreacted monomer residues. Thus, the thermal transfer recording medium having the heat-resistant lubricous protective layer containing the polydimethylsiloxane graft copolymer is intended to cause offset readily.
In contrast, in Examples 1 to 10 having the heat-resistant lubricous protective layer made of the polydimethylsiloxane graft copolymer, as shown in Fig. 5, the occurrence of offset was able to be reduced to some degree. This is because, when manufacturing the graft copolymers 1 to 9, copolymerization of the vinyl monomer with the polidimethylsiloxane compound containing the polymerizable vinyl group (e.g., methacrylic group) at one end thereof rendered the polymerization reactivity better, whereby the unreacted components (polydimethylsiloxane compounds, vinyl monomers, and the like) were able to be reduced.

As to Examples 1 to 10 each of which includes the heat-resistant lubricous protective layer made of the graft copolymer, and Examples 11 to 20 each of which includes the protective layer made of the block copolymer, the respective thermal transfer recording media containing the long chain alkyl group having a carbon number of 12 or more in the copolymers constituting the protective layer are compared with one another (compare Figs.1 and 2 with Figs.3 and 4). That is, when comparing Examples 1 to 5 with Examples 11 to 15, Examples 6 and 7 with Examples 16 and 17, Examples 8 and 9 with Examples 18 and 19, and Example 10 with Example 20, respectively, any one of the thermal transfer recording media having the heat-resistant lubricous protective layers made of the block copolymers was able to reduce the occurrence of offset efficiently as compared with the recording medium having the protective layer made of the graft copolymer.

This is considered to be because in manufacturing the block copolymers 1 to 9 in Examples 11 to 20, the use of azo-group-containing polydimethylsiloxane amide containing the silicon component as the polymerization initiator did not leave the unreacted silicon components. In contrast, in Examples 1 to 10, when manufacturing the graft copolymers 1 to 9, the unreacted components (polydimethylsiloxane compounds, vinyl monomers, and the like) were able to be reduced as mentioned above, but the polydimethylsiloxane compound and the vinyl monomer were left as unreacted components.

### (Blocking)

Then, Examples 1 to 20 and Comparative Examples 1 to 6 were evaluated for blocking prevention property. More specifically, five pieces of thermal transfer recording media according to each of Examples and Comparative Examples were prepared. These five pieces were superimposed on one another such that the ink layer of one piece was in contact with the heat-resistant lubricous protective layer of the other. These pieces were sandwiched between two glass plates, and heated at 50°C at 85%humidity for 48 hours with a load of 2 kg/cm² being applied thereto. Thereafter, the degree of blocking in each medium was evaluated visually. The results were shown in Figs.5 and 6.

First, in Comparative Examples 2 and 5, blocking occurred, resulting in defective printing. This is considered to be because the heat-resistant lubricous protective layers of Comparative Examples 2 and 5 did not contain the silicon component (polydimethylsiloxane), and thus were not able to provide enough lubricity.

Then, Examples 1 to 5 are compared with one another which have the heat-resistant lubricous protective layer containing the graft copolymer with the long chain alkyl group having the carbon number of 18 (for example, stearyl methacrylate). These examples have the relationship that they differ from one another only in the weight ratio of the vinyl monomer containing the long chain alkyl group having the carbon number of 18 (more specifically, stearyl methacrylate) to the entire monomers used in the copolymerization reaction in manufacturing the graft copolymer. That is, these examples differ from one another only in the content of the long chain alkyl group having the carbon number of 18 included in the graft copolymer.

In Examples 1 to 3, blocking did not occur. Examples 1 to 3 have the respective weight ratios of the stearyl methacrylate to the entire monomers used in the copolymerization reaction set to 30% by weight, 10% by weight, and 15% by weight, respectively (see Fig. 1). In Example 4 with the weight ratio of the stearyl methacrylate of 55% by weight, blocking slightly occurred in a spot-like manner, not affecting printing.
In contrast, in Example 5 with the weight ratio of the stearyl methacrylate of 60% by weight, much blocking occurred in a spot-like manner. The result shows that in manufacturing the graft copolymer, setting the weight ratio of the stearyl methacrylate to the entire monomers used in the copolymerization reaction to 55% by weight or less was able to reduce the occurrence of blocking efficiently. This is considered to be because, if the weight ratio of the vinyl monomer containing the long chain alkyl group having a carbon number of 12 or more is set to 55% by weight or less, the vinyl monomers can be prevented from remaining as unreacted components.

Then, the results of Examples 1, 6, and 8 were compared with one another. These examples each have the heat-resistant lubricous protective layer containing the graft copolymer containing the long chain alkyl group having a carbon number of 12 or more. These examples have the relationship that they differ from one another only in the carbon number of the vinyl monomer which contains the long chain alkyl group having a carbon number of 12 or more, and which has been used for the copolymerization reaction for manufacturing the graft copolymer. (Note that the weight ratio of each long-chain alkyl group containing vinyl monomer is 30% by weight in each of these examples.) That is, these examples differ from one another only in the carbon number of the long chain alkyl group contained in the graft copolymer: By comparing these examples, as shown in Fig. 5, only in Example 6, which did not affect printing, blocking slightly occurred in a spot-like manner. This is because the carbon number of the long chain alkyl group contained in the graft copolymer 2 in Example 6 is a minimum value of 12, as shown in Fig. 1. That is, this is because the heat-resistant lubricous protective layer of Example 6 had a low glass-transition temperature, and slightly degraded heat resistance, as compared to Examples 1 and 8, whereby the component of the protective layer was transferred to the ink layer, slightly causing blocking in a spot-like manner.

This phenomenon appeared also in Examples 11 to 19 containing the block copolymer (see Fig. 6). More specifically, the results of Examples 11 to 15 shows that setting the weight ratio of the stearyl methacrylate to the monomers used in the copolymerization reaction to 55% by weight or less in manufacturing the block copolymer can reduce the occurrence of blocking efficiently. This is considered to be because, if the weight ratio of the vinyl monomer containing the long chain alkyl group having a carbon number of 12 or more is set to 55% by weight or less, the vinyl monomers can be prevented from remaining as unreacted components. Furthermore, the results of Examples 11, 16 and 18 show that Example 16 containing the long chain alkyl group having a carbon number of 12 had the low glass-transition temperature of the heat-resistant lubricous protective layer, and the slightly degraded heat resistance, as compared to Examples 11 and 18 containing the long chain alkyl group having the carbon numbers of 18 and 22, which slightly caused the occurrence of blocking in a spot-like manner.

Although in the above description, the invention has been explained referring to Examples 1 to 20, it is understood that the invention is not limited to the examples described above. It will be apparent to those skilled in the art that various modifications might be made to the disclosed examples without departing from the intended spirit and scope of the invention.
For example, in each of Examples 1 to 20, only one kind of vinyl monomer containing the long chain alkyl group having a carbon number of 12 or more was added and polymerized in manufacturing the graft copolymers 1 to 9 and the block copolymers 1 to 9. That is, each of the graft copolymers 1 to 9, and the block copolymers 1 to 9 contained only one kind of long chain alkyl group having a carbon number of 12 or more.

However, not only one, but also two or more kinds of long chain alkyl groups having a carbon number of 12 or more may be contained in the polydimethylsiloxane copolymer. For example, when manufacturing the polydimethylsiloxane graft copolymer, the stearyl methacrylate and lauryl methacrylate may be added and copolymerized.
Note that also in this case, in order to render the heat resistance and lubricity better, and to reduce the occurrence of head chippings, the weight ratio of the long chain alkyl group having a carbon number of 12 or more to the polydimethylsiloxane copolymer may preferably be not less than 10% by weight nor more than 42% by weight. That is, in manufacturing the polydimethylsiloxane copolymer, the weight ratio of the vinyl monomer containing the long chain alkyl group having a carbon number of 12 or more (for example, stearyl methacrylate and lauryl methacrylate) to the entire monomers used in the copolymerization reaction may be not less than 15% by weight nor more than 55% by weight.

## Claims

1. A heat-resistant lubricity imparting coating agent containing a vinyl/polydimethylsiloxane-copolymer, said vinyl/polydimethylsiloxane-copolymer including a long chain alkyl group having a carbon number of 12 or more, wherein, when manufacturing the vinyl/polydimethylsiloxane-copolymer, the weight ratio of a vinyl monomer containing the long chain alkyl group having a carbon number of 12 or more to the entire monomers used in a copolymerization reaction is not less than 15% by weight nor more than 55% by weight.

2. The heat-resistant lubricity imparting coating agent according to claim 1, wherein the weight ratio of said long chain alkyl group having a carbon number of 12 or more to the vinyl/polydimethylsiloxane-copolymer is not less than 10% by weight nor more than 42% by weight.

3. The heat-resistant lubricity imparting coating agent according to any one of claims 1 to 2, further containing a binder made of a resin.

4. The heat-resistant lubricity imparting coating agent according to any one of claims 1 to 3, wherein the vinyl/polydimethylsiloxane-copolymer is a vinyl/polydimethylsiloxane-graft-copolymer which is obtained by copolymerization of at least the vinyl monomer containing the long chain alkyl group having a carbon number of 12 or more with a polydimethylsiloxane compound containing a polymerizable vinyl group at one end thereof.

5. The heat-resistant lubricity imparting coating agent according to any one of claims 1 to 3, wherein the vinyl/polydimethylsiloxane-copolymer is a vinyl/polydimethylsiloxane-block-copolymer which is obtained by copolymerization of at least an azo-group-containing polydimethylsiloxane amide serving as a polymerization initiator with the vinyl monomer containing the long chain alkyl group having a carbon number of 12 or more.

6. The heat-resistant lubricity imparting coating agent according to any one of claims 1 to 5, wherein a silicon component is contained, only in molecules of thevinyl/polydimethylsiloxane-copolymer.

7. A thermal transfer recording medium, comprising:
a substrate film having the front surface and the back surface thereof;
an ink layer formed on the front surface of the substrate film; and
a heat-resistant lubricous protective layer formed on the back surface of the substrate film,
wherein said heat-resistant lubricous protective layer includes a vinyl/polydimethylsiloxane-copolymer according to claim 1 containing a long chain alkyl group having a carbon number of 12 or more.

8. The thermal transfer recording medium according to claim 7, wherein the weight ratio of said long chain alkyl group having a carbon number of 12 or more to the vinyl/polydimethylsiloxane-copolymer is not less than 10% by weight nor more than 42% by weight.

9. The thermal transfer recording medium according to claim 7, wherein said heat-resistant lubricous protective layer is formed by applying a heat-resistant lubricity imparting coating agent containing the vinyl/polydimethylsiloxane-copolymer, said vinyl/polydimethylsiloxane-copolymer being manufactured such that the weight ratio of a vinyl monomer containing the long chain alkyl group having a carbon number of 12 or more to the entire monomers used in a copolymerization reaction is not less than 15% by weight nor more than 55% by weight in manufacturing the vinyl/polydimethylsiloxane-copolymer.

10. The thermal transfer recording medium according to any one of claims 7 to 9, wherein the heat-resistant lubricous protective layer contains a binder made of a resin.

11. The thermal transfer recording medium according to any one of claims 7 to 10, wherein the vinyl/polydimethylsiloxane-copolymer is a vinyl/polydimethylsiloxane-graft-copolymer which is obtained by copolymerization of at least the vinyl monomer containing the long chain alkyl group having a carbon number of 12 or more with a polydimethylsiloxane compound containing a polymerizable vinyl group at one end thereof.

12. The thermal transfer recording medium according to any one of claims 7 to 10, wherein the vinyl/polydimethylsiloxane-copolymer is a vinyl/polydimethylsiloxane-block-copolymer which is obtained by copolymerization of at least an azo-group-containing polydimethylsiloxane amide serving as a polymerization initiator with the vinyl monomer containing the long chain alkyl group having a carbon number of 12 or more.

13. The thermal transfer recording medium according to any one of claims 7 to 12, wherein the heat-resistant lubricous protective layer contains a silicon component only in molecules of the vinyl/polydimethylsiloxane-copolymer.

## Patentansprüche

1. Wärmebeständiges, Schmierfähigkeit verleihendes Beschichtungsmittel, das ein Vinyl/Polydimethylsiloxan-Copolymer enthält, wobei das Vinyl/Polydimethylsiloxan-Copolymer eine langkettige Alkylgruppe mit einer Kohlenstoffzahl von 12 oder mehr einschließt, wobei bei der Herstellung des Vinyl/Polydimethylsiloxan-Copolymers das Gewichtsverhältnis eines die langkettige Alkylgruppe mit einer Kohlenstoffzahl von 12 oder mehr enthaltenden Vinylmonomers zu den gesamten in einer Copolymerisationsreaktion verwendeten Monomeren nicht weniger als 15 Gew.-% und nicht mehr als 55 Gew.-% beträgt.

2. Wärmebeständiges, Schmierfähigkeit verleihendes Beschichtungsmittel gemäß Anspruch 1, wobei das Gewichtsverhältnis der langkettigen Alkylgruppe mit einer Kohlenstoffzahl von 12 oder mehr zu dem Vinyl/Polydimethylsiloxan-Copolymer nicht weniger als 10 Gew.-% und nicht mehr als 42 Gew.-% beträgt.

3. Wärmebeständiges, Schmierfähigkeit verleihendes Beschichtungsmittel gemäß irgendeinem der Ansprüche 1 bis 2, das ferner ein aus Harz hergestelltes Bindemittel enthält.

4. Wärmebeständiges, Schmierfähigkeit verleihendes Beschichtungsmittel gemäß irgendeinem der Ansprüche 1 bis 3, wobei das Vinyl/Polydimethylsiloxan-Copolymer ein Vinyl/Polydimethylsiloxan-Propfcopolymer ist, das durch Copolymerisation von mindestens dem die langkettige Alkylgruppe mit einer Kohlenstoffanzahl von 12 oder mehr enthaltenden Vinylmonomer mit einer Polydimethylsiloxanverbindung, die an einem Ende eine polymerisierbare Vinylgruppe enthält, erhalten wird.

5. Wärmebeständiges, Schmierfähigkeit verleihendes Beschichtungsmittel gemäß irgendeinem der Ansprüche 1 bis 3,
wobei das Vinyl/Polydimethylsiloxan-Copolymer ein Vinyl/Polydimethylsiloxan-Blockcopolymer ist, das durch Copolymerisation von mindestens einem eine Azogruppe enthaltenden Polydimethylsiloxanamid, das als Polymerisationsinitiator dient, mit dem die langkettige Alkylgruppe mit einer Kohlenstoffzahl von 12 oder mehr enthaltenden Vinylmonomer erhalten wird.

6. Wärmebeständiges, Schmierfähigkeit verleihendes Beschichtungsmittel gemäß irgendeinem der Ansprüche 1 bis 5, wobei nur in Molekülen des Vinyl/Polydimethylsiloxan-Copolymers eine Silikonkomponente enthalten ist.

7. Thermotransfer-Aufzeichnungsmedium, umfassend:
einen Substratfilm, der eine vorderseitige Oberfläche und eine rückseitige Oberfläche aufweist;
eine auf der vorderseitigen Oberfläche des Substratfilms gebildete Farbschicht; und
eine auf der rückseitigen Oberfläche des Substratfilms gebildete wärmebeständige, schmierfähige Schutzschicht,
wobei die wärmebeständige, schmierfähige Schutzschicht ein Vinyl/Polydimethylsiloxan-Copolymer gemäß Anspruch 1 einschließt, das eine langkettige Alkylgruppe mit einer Kohlenstoffzahl von 12 oder mehr enthält.

8. Thermotransfer-Aufzeichnungsmedium gemäß Anspruch 7, wobei das Gewichtsverhältnis der langkettigen Alkylgruppe mit einer Kohlenstoffzahl von 12 oder mehr zu dem Vinyl/Polydimethylsiloxan-Copolymer nicht weniger als 10 Gew.-% und nicht mehr als 42 Gew.-% beträgt.

9. Thermotransfer-Aufzeichnungsmedium gemäß Anspruch 7, wobei die wärmebeständige, schmierfähige Schutzschicht durch Applizieren eines wärmeständigen, Schmierfähigkeit verleihenden Beschichtungsmittels, das das Vinyl/Polydimethylsiloxan-Copolymer enthält, gebildet wird, wobei das Vinyl/Polydimethylsiloxan-Copolymer so hergestellt wird, dass das Gewichtsverhältnis eines die langkettige Alkylgruppe mit einer Kohlenstoffzahl von 12 oder mehr enthaltenden Vinylmonomers zu den gesamten in einer Copolymerisationsreaktion verwendeten Monomeren nicht weniger als 15 Gew.-% und nicht mehr als 55 Gew.-% beträgt.

10. Thermotransfer-Aufzeichnungsmedium gemäß irgendeinem der Ansprüche 7 bis 9, wobei die wärmebeständige, schmierfähige Schutzschicht ein aus Harz hergestelltes Bindemittel enthält.

11. Thermotransfer-Aufzeichnungsmedium gemäß irgendeinem der Ansprüche 7 bis 10, wobei das Vinyl/Polydimethylsiloxan-Copolymer ein Vinyl/Polydimethylsiloxan-Propfcopolymer ist, das durch Copolymerisation von mindestens dem die langkettige Alkylgruppe mit einer Kohlenstoffanzahl von 12 oder mehr enthaltenden Vinylmonomer mit einer Polydimethylsiloxanverbindung, die an einem Ende eine polymerisierbare Vinylgruppe enthält, erhalten wird.

12. Thermotransfer-Aufzeichnungsmedium gemäß irgendeinem der Ansprüche 7 bis 10, wobei das Vinyl/Polydimethylsiloxan-Copolymer ein Vinyl/Polydimethylsiloxan-Blockcopolymer ist, das durch Copolymerisation von mindestens einem eine Azogruppe enthaltenden Polydimethylsiloxanamid, das als Polymerisationsinitiator dient, mit dem die langkettige Alkylgruppe mit einer Kohlenstoffzahl von 12 oder mehr enthaltenden Vinylmonomer erhalten wird.

13. Thermotransfer-Aufzeichnungsmedium gemäß irgendeinem der Ansprüche 7 bis 12, wobei die wärmebeständige, schmierfähige Schutzschicht nur in Molekülen des Vinyl/Polydimethylsiloxan-Copolymers eine Silikonkomponente enthält.

## Revendications

1. Agent de revêtement conférant un pouvoir lubrifiant résistant à la chaleur contenant un copolymère de vinyle/polydiméthylsiloxane, ledit copolymère de vinyle/polydiméthylsiloxane incluant un groupe alkyle à longue chaîne ayant un nombre d'atomes de carbone de 12 ou plus, dans lequel, lors de la préparation du copolymère de vinyle/polydiméthylsiloxane, le rapport en poids d'un monomère de vinyle contenant le groupe alkyle à longue chaîne ayant un nombre d'atomes de carbone de 12 ou plus à tous les monomères utilisés dans une réaction de copolymérisation n'est pas inférieur à 15 % en poids et pas supérieur à 55 % en poids.

2. Agent de revêtement conférant un pouvoir lubrifiant résistant à la chaleur selon la revendication 1, dans lequel le rapport en poids dudit groupe alkyle à longue chaîne ayant un nombre d'atomes de carbone de 12 ou plus au copolymère de vinyle/polydiméthylsiloxane n'est pas inférieur à 10 % en poids et pas supérieur à 42 % en poids.

3. Agent de revêtement conférant un pouvoir lubrifiant résistant à la chaleur selon la revendication 1 ou 2, comprenant en outre un liant constitué de résine.

4. Agent de revêtement conférant un pouvoir lubrifiant résistant à la chaleur selon l'une quelconque des revendications 1 à 3, dans lequel le copolymère de vinyle/polydiméthylsiloxane est un copolymère greffé de vinyle/polydiméthylsiloxane qui est obtenu par la copolymérisation d'au moins le monomère de vinyle contenant le groupe alkyle à longue chaîne ayant un nombre d'atomes de carbone de 12 ou plus avec un composé polydiméthylsiloxane contenant un groupe vinyle polymérisable en une extrémité.

5. Agent de revêtement conférant un pouvoir lubrifiant résistant à la chaleur selon l'une quelconque des revendications 1 à 3, dans lequel le copolymère de vinyle/polydiméthylsiloxane est un copolymère séquencé de vinyle/polydiméthylsiloxane qui est obtenu par la copolymérisation d'au moins un polydiméthylsiloxane amide contenant un groupe azo servant d'initiateur de polymérisation avec le monomère de vinyle contenant le groupe alkyle à longue chaîne ayant un nombre d'atomes de carbone de 12 ou plus.

6. Agent de revêtement conférant un pouvoir lubrifiant résistant à la chaleur selon l'une quelconque des revendications 1 à 5, dans lequel un composant siliconé est présent, uniquement dans des molécules du copolymère de vinyle/polydiméthylsiloxane.

7. Milieu d'enregistrement par transfert thermique, comprenant :
un film de substrat ayant une surface frontale et une surface arrière ;
une couche d'encre formée sur la surface frontale du film de substrat ; et
une couche protectrice lubrifiante résistant à la chaleur formée sur la surface arrière du film de substrat,
dans lequel ladite couche protectrice lubrifiante résistant à la chaleur comprend un copolymère de vinyle/polydiméthylsiloxane selon la revendication 1 contenant un groupe alkyle à longue chaîne ayant un nombre d'atomes de carbone de 12 ou plus.

8. Milieu d'enregistrement par transfert thermique selon la revendication 7, dans lequel le rapport en poids dudit groupe alkyle à longue chaîne ayant un nombre d'atomes de carbone de 12 ou plus au copolymère de vinyle/polydiméthylsiloxane n'est pas inférieur à 10 % en poids et pas supérieur à 42 % en poids.

9. Milieu d'enregistrement par transfert thermique selon la revendication 7, dans lequel ladite couche protectrice lubrifiante résistant à la chaleur est formée par l'application d'un agent de revêtement conférant un pouvoir lubrifiant résistant à la chaleur comprenant un copolymère de vinyle/polydiméthylsiloxane, ledit copolymère de vinyle/polydiméthylsiloxane étant préparé de sorte que le rapport en poids d'un monomère de vinyle contenant le groupe alkyle à longue chaîne ayant un nombre d'atomes de carbone de 12 ou plus à tous les monomères utilisés dans une réaction de copolymérisation ne soit pas inférieur à 15 % en poids et pas supérieur à 55 % en poids lors de la préparation du copolymère de vinyle/ polydiméthylsiloxane.

10. Milieu d'enregistrement par transfert thermique selon l'une quelconque des revendications 7 à 9, dans lequel la couche protectrice lubrifiante résistant à la chaleur comprend un liant constitué de résine.

11. Milieu d'enregistrement par transfert thermique selon l'une quelconque des revendications 7 à 10, dans lequel le copolymère de vinyle/polydiméthylsiloxane est un copolymère greffé de vinyle/polydiméthylsiloxane qui est obtenu par la copolymérisation d'au moins le monomère de vinyle contenant le groupe alkyle à longue chaîne ayant un nombre d'atomes de carbone de 12 ou plus avec un composé polydiméthylsiloxane contenant un groupe vinyle polymérisable en une extrémité.

12. Milieu d'enregistrement par transfert thermique selon l'une quelconque des revendications 7 à 10, dans lequel le copolymère de vinyle/polydiméthylsiloxane est un copolymère séquencé de vinyle/polydiméthylsiloxane qui est obtenu par la copolymérisation d'au moins un polydiméthylsiloxane amide contenant un groupe azo servant d'initiateur de polymérisation avec le monomère de vinyle contenant le groupe alkyle à longue chaîne ayant un nombre d'atomes de carbone de 12 ou plus.

13. Milieu d'enregistrement par transfert thermique selon l'une quelconque des revendications 7 à 12, dans lequel la couche protectrice lubrifiante résistant à la chaleur comprend un composant siliconé uniquement dans des molécules du copolymère de vinyle/polydiméthylsiloxane.
